# EUROPÄISCHE PATENTSCHRIFT

(11) **EP 3 997 338 B1**
(45) Veröffentlichungstag und Bekanntmachung des Hinweises auf die Patenterteilung: **26.06.2024**
(21) Anmeldenummer: 20789536.8
(22) Anmeldetag: 05.10.2020
(51) Int. Cl.: F04B 13/00, A47J 31/40, A47J 31/42, A47J 42/50, F04B 41/02

(54) **HUBSYSTEM ZUR DOSIERUNG VON EINEM FLUID AUS EINEM BEHÄLTER UND BEHÄLTER FÜR EIN FLUID**
STROKESYSTEM FOR DISPENSING A FLUID FROM A CONTAINER AND CONTAINER FOR A FLUID
SYSTEME DE LEVAGE POUR DISTRIBUER UN FLUIDE D'UN RÉCIPIENT ET RÉCIPIENT POUR UN FLUIDE

(30) Priorität: 04.10.2019 DE 202019004089 U; 13.03.2020 DE 102020001711
(43) Veröffentlichungstag der Anmeldung: 18.05.2022
(73) Patentinhaber: SMIICS GmbH, 37083 Göttingen (DE)
(72) Erfinder: SCHLACK, Stefan, 37083 Göttingen (DE)
(74) Vertreter: Müller-Boré & Partner Patentanwälte PartG mbB
(86) Internationale Anmeldenummer: PCT/EP2020/077764
(87) Internationale Veröffentlichungsnummer: WO 2021/064233

(56) Entgegenhaltungen:
- EP-B1- 1 938 054
- EP-B1- 3 193 015
- WO-A1-2008/090139
- DE-A1- 2 741 803
- DE-A1-102008 039 491
- DE-A1-102008 062 741
- DE-U1-202005 015 569

## Beschreibung

Die vorliegende Anmeldung betrifft ein Hubsystem zur Dosierung von einem Fluid aus einem Behälter, sowie ein Behälter für ein Fluid, der mit einem Hubsystem verbunden oder verbindbar ist.

Eine exakte und genaue Dosierung von Fluid spielt in einer Vielzahl von Anwendungsbereichen eine große Rolle. So wird beispielsweise bei der Zubereitung von Babynahrung aus einem Babynahrungskonzentrat eine entsprechende Konzentratmenge abgemessen bzw. dosiert und mit Wasser vor dem Verabreichen der Babynahrung vermischt. Oder etwa bei der Zubereitung von Kaffee muss eine entsprechende Menge an Kaffeepulver oder Kaffeebohnen abgemessen bzw. dosiert werden und mit einer gewünschten Menge an Wasser vermischt werden. Aber auch im biochemischen Bereich in Forschungs- und Entwicklungslaboren spielt die exakte und genaue Dosierung von einem Fluid eine große Rolle, beispielsweise bei der Zubereitung eines flüssigen Mediums oder eines Puffers.

Neben der exakten und genauen Dosierung des Fluids spielt bei sämtlichen zuvor beschriebenen Bereichen eine große Rolle, dass das Fluid bzw. das Wasser eine bestimmte Temperatur aufweist. Die aus dem Babynahrungskonzentrat zubereitete Babynahrung sollte eine Temperatur von etwa 37 °C (Grad Celsius) aufweisen, um für das Baby verzehrfertig zu sein. Bei der Zubereitung von Kaffee sollte das Wasser idealerweise auf eine Temperatur von etwa 86 Grad temperiert werden, bevorzugt auf etwa 93 bis 96 °C, und danach die Temperatur konstant gehalten werden, um eine optimale Extraktionstemperatur zu gewährleisten. Auch bei der Zubereitung eines Stoffgemischs, beispielsweise eines flüssigen Mediums oder Puffers, spielt die Temperatur des verwendeten Fluids eine große Rolle. Bei der Zubereitung eines Mediums sollte das Fluid in der Regel eine Temperatur von etwa 37 °C aufweisen. Oftmals ist das zu verwendete Fluid vor der Verwendung eingefroren, sodass es wünschenswert ist, das Fluid zur Verwendung schnellstmöglich auf die gewünschte Temperatur zu erhitzen.

Daher ist es wünschenswert, neben der exakten und genauen Dosierung eines Fluids für sämtliche zuvor beschriebenen Anwendungsbereiche das Fluid auch gleichzeitig schnell und zuverlässig auf eine bestimmte Temperatur temperieren zu können.

Die Dosierung und Zubereitung bedeutet, dass die einzelnen Zutaten vermischt oder ineinander gelöst, erwärmt und/oder auf anderweitige Weise verzehrfertig gemacht werden. Hierbei spielt weiterhin eine große Rolle, dass die Zutaten steril zubereitet werden können. Insbesondere bei der Verwendung von Leitungswasser als Fluid, beispielsweise bei der Zubereitung und Dosierung von Babynahrung und von Kaffee, können bei sehr kalkhaltigem Wasser die einzelnen Komponenten, beispielsweise Leitungen der Dosierung- und Zubereitungsvorrichtungen verkalken. Darüber hinaus sollte auch das zur Fluid zur Zubereitung von Babynahrung, Kaffee oder aber eines Mediums steril und keimfrei verabreicht werden.

Daher müssen alle Komponenten, die mit dem Fluid bzw. dem Pulver in Kontakt geraten, regelmäßig gereinigt und/oder entkalkt werden.

Die DE 10 2008 062 741 A1 beschreibt ein Verfahren zum Dosieren eines Beschichtungsfluids in einer Verarbeitungsmaschine mit einer Temperiereinheit für das Beschichtungsfluid, wobei in Förderrichtung des Beschichtungsfluids der Temperiereinheit ein Reservoir für das Beschichtungsfluid vorgeordnet sind, die Temperiereinheit zumindest eine auf das Beschichtungsfluid wirkende Temperiereinrichtung mit einem Temperiermittel umfasst und der Temperiereinheit eine Dosiereinrichtung für das Beschichtungsfluid nachgeordnet ist, und der Temperiereinheit eine das Beschichtungsfluid führende Zuführleitung mit einer integrierten Förderpumpe zugeordnet ist, welche mit dem Reservoir, der Förderpumpe und der Dosiereinrichtung in Wirkverbindung ist.

Die DE 10 2008 039 491 A1 beschreibt ein Verfahren zum Steuern einer Temperiereinheit für ein Fluid, wobei in Förderrichtung des Fluids der Temperiereinheit ein Reservoir sowie eine erste Förderpumpe für das Fluid vorgeordnet sind. Die Temperiereinheit umfasst zumindest eine auf das Fluid wirkende Temperiereinrichtung mit einem Temperiermittel und der Temperiereinheit ist eine Dosiereinrichtung für das Fluid nachgeordnet. Der Temperiereinheit ist eine das Fluid führende Zuführleitung zugeordnet, welche mit dem Reservoir, der Förderpumpe und der Dosiereinrichtung in Wirkverbindung ist. In der Temperiereinheit ist ein erster Temperatursensor angeordnet und die Förderpumpe, der Temperatursensor und die Temperiereinheit sind schaltungs- und datentechnisch mit einer Regeleinrichtung gekoppelt.

Die DE 20 2005 015 569 U1 beschreibt eine Zuschlagsstoff-Dosiervorrichtung für eine Polyurethan-Anlage umfassend eine austauschbare Kartusche und ein mit der Kartusche koppelbares Antriebsmodul, wobei die Kartusche aufweist: ein Behältnis für den Zugabestoff, eine Einrichtung zum Versorgen des Behältnisses mit Druckluft, welche an eine Druckversorgungseinrichtung anschliessbar ist, sowie eine Kolbendosiervorrichtung ohne Antrieb, welche mit dem Behältnis in Strömungsverbindung steht oder bringbar ist, mit einer Austragsdüse verbunden oder verbindbar ist und mit dem Antriebsmodul derart lösbar koppelbar ist, dass das Antriebsmodul zum Betrieb der Kolbendosiervorrichtung verwendet ist.

Die EP 3 193 015 B1 beschreibt eine Dosierpumpe, beispielsweise für eine Pipettiervorrichtung in einem automatischen Analysegerät, sowie ein Verfahren zur Überprüfung ihrer Funktionsfähigkeit.

Die WO 2008/090139 A1 beschreibt eine Dosierpumpe vom Membranspritzentyp, insbesondere zum Einspritzen eines flüssigen Additivs in einen Kraftstofftank, wobei die Pumpe einen hohlen Pumpenkörper umfasst, in dem angeordnet sind: eine Membran, die das Innere der Pumpe in eine Dosierkammer unterteilt, und eine Betätigungskammer; ein Aktuator in der Betätigungskammer; einen Kolben mit einem mit der Membran verbundenen Kolbenkopf und einer Stange, die sich vom Kolbenkopf zum Aktor hin erstreckt, wobei der Aktor und die Stange zusammenwirken, um den Kolben zwischen einer Ruheposition und einer Einsatzposition zu bewegen; und ein Führungselement, das die Drehbewegung des Kolbens um seine Achse begrenzt.

Die EP 1 938 054 B1 beschreibt eine Dosiervorrichtung für Zusatzstoffe für eine Polyurethananlage mit einer austauschbaren Kartusche und einem Antriebsmodul, das mit der Kartusche koppelbar ist, wobei die Kartusche aufweist einen Behälter für den Zusatzstoff, eine Einrichtung zur Versorgung des Behälters mit Druckluft, die an eine Druckversorgungseinrichtung anschließbar ist.

Die DE 27 41 803 A1 beschreibt eine Vorrichtung zum Fördern und/oder Dosieren flüssiger bis hochviskoser Medien.

Aus der DE 10 2018 009 551 A1 ist eine Vorrichtung zur Dosierung und/oder Zubereitung von Babynahrung, insbesondere von Babymilch oder Babybrei, bekannt. In der DE 10 2019 001 063 A1 ist eine Vorrichtung zum Dosieren und Mahlen von Kaffeebohnen und/oder zur Zubereitung von Kaffee, insbesondere von Filterkaffee, beschrieben.

Ausgehend vom Stand der Technik ist es die Aufgabe der vorliegenden Erfindung, eine vereinfachtes und sicheres Temperieren und Dosieren eines Fluids zu ermöglichen.

Erfindungsgemäß wird diese Aufgabe durch den Gegenstand der unabhängigen Ansprüche gelöst. Bevorzugte Ausführungsformen ergeben sich aus den abhängigen Ansprüchen.

Gemäß einem Aspekt der Erfindung wird eine Hubsystem zur Dosierung von einem Fluid aus einem Behälter bereitgestellt, umfassend: eine Kolbenpumpe mit einem Kolben, sodass durch eine Auslenkung des Kolbens ein Fluid aus einem Behälter dosiert werden kann, und eine Temperiereinrichtung zum Temperieren des mittels des Hubsystems zu dosierenden Fluids.

Die Kolbenpumpe kann neben dem Kolben eine Drehplatte umfassen, wobei der Kolben mittels der Drehplatte auslenkbar ist. Die Drehplatte kann wiederverwendbar sein und mit dem Motor verbunden sein. Die Kolbenpumpe kann mit der Drehplatte verbunden oder verbindbar sein. Beispielsweise kann die Kolbenpumpe mit der Drehplatte lösbar verbunden sein, indem beide Elemente beispielsweise miteinander verklickt sind. Es ist aber auch denkbar, dass die Kolbenpumpe mit der Drehplatte fest verbunden, beispielsweise verklebt ist. Alternativ zur Drehplatte kann das Hubsystem bzw. die Kolbenpumpe auch linear angetrieben werden, beispielsweise mittels eines Hubmagnets oder eines Servoantriebs.

So kann mittels des Hubsystems ein Druck auf einen Behälter für ein Fluid mit Hilfe eines Pumpmechanismus ausgeübt werden, sodass das Fluid korrekt dosiert werden kann. Es ist aber auch denkbar, dass auf den Behälter ein Druck mit Hilfe eines Drehmechanismus oder eines anderen Mechanismus ausgeübt werden kann, sodass das Fluid korrekt und auf besonders einfach realisierbare Weise dosiert werden kann. Das Hubsystem kann mittels der Kolbenpumpe das Fluid dosieren. Die Drehplatte kann mittels eines Motors angetrieben werden und einen Druck auf den Kolben ausüben. Anstelle einer Drehplatte kann auch eine Nockenwelle vorgesehen sein, oder ein Hubmagnet oder ein Servoantrieb. Der Kolben kann derart mit dem Behälter verbindbar oder verbunden sein, sodass der Kolben durch die Drehplatte ausgelenkt bzw. bewegt wird. Durch diese Auslenkung bzw. Bewegung kann das Fluid aus dem Behälter gepumpt und korrekt dosiert werden.

Das Hubsystem ist ausgestaltet, um eine diskrete bzw. vordefinierte Menge an Fluid abzugeben, wobei, vorzugsweise, die diskrete bzw. vordefinierte Menge an Fluid mit einem Hub bzw. Kolbenhub abgebbar ist. Mit Hub ist der Weg gemeint, den der Kolben bei einem Hin- und Hergang zurücklegt bzw. der Weg, den der Kolben bei der Auslenkung zurücklegt. Es ist aber auch denkbar, dass die diskrete bzw. vordefinierte Menge nicht mit einem Hub abgebbar ist, sondern mit mehr als einem Hub bzw. mit mehreren Hüben abgebbar ist.

Mit diesem Hubsystem lässt sich eine Vielzahl von Fluiden dosieren. Beispielsweise kann es sich bei dem mittels des Hubsystems zu dosierenden Fluids um ein Fluid zur Zubereitung von Babynahrung aus einem Babynahrungskonzentrat handeln, oder aber um ein Fluid zur Zubereitung von Kaffee aus einem Kaffeepulver insbesondere aus kurz zuvor gemahlenen Kaffeebohnen. Bei dem Fluid handelt es sich insbesondere um Wasser, wobei auch andere Flüssigkeiten denkbar sind. Weiterhin kann es sich bei dem Fluid um ein Fluid zur Zubereitung eines Stoffgemischs, beispielsweise eines Mediums oder eines Puffers, handeln. Diese Aufzählung soll nicht limitierend sein. Denkbar ist, dass jede Art von Fluiden mittels des Hubsystems dosiert werden können, insbesondere wenn das Fluid auf eine bestimmte Temperatur temperiert, d.h., geheizt oder gekühlt werden soll. Hierzu weist das Hubsystem eine Temperiereinrichtung zum Temperieren des mittels des Hubsystems zu dosierenden Fluids auf.

Diese Ausgestaltung ermöglicht eine exakte, genaue und besonders einfache Dosierung des Fluids mittels der Kolbenpumpe. Gleichzeitig zur Dosierung oder zeitlich versetzt, beispielsweise unmittelbar bzw. kurz vor der Dosierung oder unmittelbar bzw. kurz nach der Dosierung mittels der Kolbenpumpe, kann das Fluid in dem Behälter mittels der Temperiereinrichtung auf eine gewünschte Temperatur temperiert werden und/oder auf dieser Temperatur über eine längere Zeit gehalten werden. Somit kann durch das Hubsystem das Fluid nicht nur dosiert werden, sondern gleichzeitig auf die gewünschte Temperatur temperiert werden. Dadurch kann ein Fluid auf die gewünschte Verzehrtemperatur gebracht werden, beispielsweise bei der Zubereitung von Babynahrung oder Kaffee. Weiterhin ermöglicht das Hubsystem aber auch ein besonders effizientes und zeitsparendes Dosieren und Temperieren des Fluids. Insbesondere im Bereich der Biochemie, beispielsweise bei der Zubereitung eines Stoffgemischs, beispielsweise eines Mediums oder eines Puffers, werden somit längere Standzeiten vermieden und ein effizientes Arbeiten ermöglicht.

Vorzugsweise umfasst das Hubsystem einen Behälter für ein Fluid, wobei das Hubsystem mit dem Behälter verbunden oder verbindbar ist, wobei, vorzugsweise, das Hubsystem mit einer ersten Öffnung des Behälters verbunden oder verbindbar ist.

Das Hubsystem kann mit dem Behälter, in dessen Inneren sich das zu dosierende und zu temperierende Fluid befindet, fest verbunden oder verbindbar sein. Beispielsweise kann das Hubsystem mit einer ersten Öffnung des Behälters, beispielsweise der Auslassöffnung des Behälters, aus dem das Fluid entnommen werden kann, keimdicht verbunden oder verbindbar sein. Hierzu kann das Hubsystem mit der ersten Öffnung fest oder lösbar, beispielsweise durch Verkleben oder Verschrauben, verbunden sein, sodass das Innere des Behälters in Fluidverbindung mit dem Hubsystem steht, beispielsweise über Schläuche oder andere fluidführende Leitungen. Auf Schläuche und andere fluidführende Leitungen kann verzichtet werden, insbesondere wenn das Hubsystem in Schwerkraftrichtung unter dem Behälter angeordnet ist. In diesem Fall kann die Kolbenpumpe bzw. der Kolben gravimetrisch befüllt werden. Somit kann auf einfache Weise das Fluid aus dem Inneren des Behälters gepumpt werden und dosiert werden.

Dadurch, dass das Hubsystem mit dem Behälter für ein Fluid verbunden oder verbindbar ist, kann das Hubsystem mit Behälter auch für verschiedene, aus dem Stand der Technik bekannte Vorrichtungen verwendet werden bzw. das Hubsystem kann mit diesen Vorrichtung kombiniert werden.

Beispielsweise kann das Hubsystem mit einer Vorrichtung zur Dosierung von Babynahrung (wie in der Anmeldung DE 10 2018 009 551 A1 beschrieben) verbindbar oder verbunden sein. Dies ermöglicht die Zubereitung und Dosierung von Babynahrung, wobei das Fluid mittels der Temperiereinrichtung auf eine Trinktemperatur von etwa 37 °C temperiert werden kann. Im Fall, dass das Fluid bereits steril ist, reicht eine Erwärmung auf 37 °C. Im Fall, dass das Fluid nicht steril sein sollte, beispielsweise Leitungswasser, könnte das Fluid zunächst mittels der Temperiereinrichtung sterilisiert bzw. abgekocht werden und danach auf die Trinktemperatur gekühlt und auf dieser Temperatur gehalten werden. Mittels des Hubsystems kann bevorzugt, in einem Schritt bzw. in einem Hub oder in mehreren Schritten bzw. in mehreren Hüben, eine diskrete bzw. vordefinierte Menge von 30ml Fluid aus dem Behälter dosiert werden und mit einer entsprechenden Menge an Babynahrungskonzentrat vermischt werden. Es sind aber auch andere Mengen an Fluid denkbar, die mit den Zubereitungsvorschriften der Babypulverhersteller in Einklang stehen, beispielsweise 60 ml, 90 ml, 120 ml, 150 ml, 180 ml, oder 210 ml. Dies kann dadurch erreicht werden, dass Kolben mit entsprechenden Volumina eingesetzt werden, sodass das entsprechende Volumen an Fluid mittels eines Hubs dosiert werden kann. Denkbar ist aber auch, dass mehrere Hübe zur Dosierung der diskreten bzw. vordefinierten Menge nötig sind. Weiterer Dosiermengen bzw. Hub-Einstellungen sind denkbar. Somit kann mittels des Hubsystems auf besonders schnelle und sichere Weise die gewünschten Mengen an Fluid zur Zubereitung von Babynahrung, beispielsweise in einer Vorrichtung zur Dosierung und Zubereitung von Babynahrung, bereitgestellt werden.

Weiterhin kann das Hubsystem mit einer Vorrichtung zur Dosierung von Kaffee (wie in der Anmeldung DE 10 2019 001 063 A1 beschrieben) verbindbar oder verbunden sein. Dies ermöglicht die Zubereitung und Dosierung von Kaffee, wobei das Fluid aus dem Behälter mittels der Temperiereinrichtung idealerweise in "einem Rutsch" auf über 86 °C temperiert werden kann, bevorzugt 93 oder 96 °C, und danach die Temperatur über eine gewisse Zeit konstant gehalten werden kann. Dies ermöglicht eine optimale Extraktionstemperatur von Kaffee. Weiterhin kann mittels der Temperiereinrichtung die optimale Brühtemperatur für den jeweiligen Kaffee eingestellt werden. Dies ist vorteilhaft, denn bei zu hohen Brühtemperaturen werden verstärkt Bitterstoffe aus dem Kaffee gelöst. Der Kaffee kann dadurch ungenießbar stark und/oder bitter werden. Ist das Kaffeewasser zu kalt, können wichtige Aromastoffe nicht genügend aus dem Kaffee extrahiert werden. Der Kaffee kann dann selbst bei längeren Brühzeiten und hochwertigen Kaffeesorten fad, lasch oder sauer schmecken. Wie heiß Kaffeewasser sein sollte, bleibt aber in einem gewissen Umfang stets Geschmackssache. Etwas Experimentierfreude kann hier durchaus angebracht sein, sodass mittels der Temperiereinrichtung, insbesondere mittels einer Temperatursteuer- oder Temperaturregeleinrichtung, das Fluid und somit der Kaffee manuell oder automatisiert auf die gewünschte Temperatur des jeweiligen

Benutzers temperiert werden kann.

Weiterhin kann das Hubsystem mit einer Vorrichtung zur Zubereitung eines Stoffgemischs, beispielsweise eines Mediums oder eines Puffers, verbindbar oder verbunden sein. Dies ermöglicht die Zubereitung eines Stoffgemischs, beispielsweise eines Mediums oder eines Puffers, wobei das Fluid aus dem Behälter mittels der Temperiereinrichtung auf etwa 37 °C erhitzt werden kann. Die Zellkultur bzw. das Medium muss in der Regel auf 37 °C erhitzt werden. Die Erhitzung erfolgt gewöhnlich in Wasserbädern, was etwa 15 bis 30 Minuten dauert. Insbesondere am Wochenende oder wenn Zellkulturmedien schnell getauscht werden müssen behindert diese Zeit erheblich. Des Weiteren müssen Wasserbäder gereinigt werden und es wird Reinstwasser verwendet. Mit Hilfe der Temperiereinrichtung ist es auch möglich eingefrorene Flüssigkeiten, wie zum Beispiel Seren aufzutauen, und anschließend mittels des Hubsystems zu dosieren. Somit ist mit dem Hubsystem und dem damit verbundenen bzw. verbindbaren Behälter ein besonders effizientes Arbeiten bei der Zubereitung eines Stoffgemischs, beispielsweise eines Mediums oder eines Puffers, möglich. Bei der Zubereitung von Medien und Puffer könnten mittels des Hubsystems bevorzugt Zusatzstoffe in einer Menge von etwa 0,01 bis 0,1 ml dosiert werden. Aber auch andere Dosiermengen bzw. Hub-Einstellungen sind denkbar. Denkbar ist, dass mittels eines Hubs eine diskrete bzw. vordefinierte Fluidmenge, beispielsweise 0,1 ml, dosiert werden kann. Es können aber auch Kolben vorgesehen sein, welche beispielsweise ausgestaltet sind, um eine kleinere Fluidmenge von 0,01 ml zu dosieren. Dann sind zehn Hübe notwendig, um eine diskrete bzw. vordefinierte Fluidmenge von 0,1 ml zu dosieren. Das später beschriebene zweite Hubsystem, welches einen pipettenartigen Auslass bzw. eine pipettenartige Auslassöffnung umfassen kann, ist insbesondere dazu geeignet, eine kleinere Fluidmenge im Bereich von 0,01 ml bis 0,1 ml zu dosieren.

Das Hubsystem kann fest mit dem Behälter verbunden sein. Mit anderen Worten kann das Hubsystem in den Behälter integriert sein und derart integriert angeboten bzw. geliefert werden. Es ist aber auch denkbar, wie zuvor beschrieben, dass das Hubsystem und der Behälter zwei getrennte Elemente sind, die miteinander kombiniert bzw. verbunden werden können, sodass eine Dosierung von Fluid aus dem Behälter erfolgen kann. Indem das Hubsystem vorzugsweise mit dem Auslass des Behälters verbunden bzw. verbindbar ist, kann durch die Betätigung des Hubsystems das Fluids aus dem Behälter gepumpt und exakt dosiert werden. Vorzugsweise ist das Hubsystem mit einem Behälter bzw. Becher, beispielsweise eine Babyflasche, oder mit einem Trichter, beispielsweise einen Kaffeefiltertrichter, verbunden oder verbindbar, beispielsweise über ein Schlauchsystem. So kann das korrekt dosierte Fluid in den Behälter bzw. Becher eingefüllt werden.

Vorzugsweise ist der Behälter bzw. Becher in Schwerkraftrichtung unterhalb des mit dem Behälter verbindbaren bzw. verbundenen Hubsystems angeordnet. Vorzugsweise ist das Hubsystem in Schwerkraftrichtung zwischen dem Behälter bzw. Becher und dem Behälter angeordnet bzw. positioniert. Mit Schwerkraftrichtung ist die Richtung einer Geraden gemeint, die in Richtung Erdmittelpunkt zeigt. So kann das Fluid auf einfache Weise aus dem Behälter in Richtung Hubsystem durch die Schwerkraft geführt werden und aus dem Behälter in den Behälter bzw. Becher gepumpt werden, sodass das Fluid auf besonders einfache Art in den Behälter bzw. Becher geführt werden kann.

Vorzugsweise umfasst das Hubsystem wenigstens ein UV-C Leuchtmittel.

Das UV-C Leuchtmittel kann beispielsweise eine UV-C Röhre oder eine UV-C Lampe sein, welche Ultraviolettstrahlung im UV-C Bereich mit einer Wellenlänge zwischen 280 nm und 100 nm ausstrahlen. Das UV-C Leuchtmittel kann mit dem Hubsystem verbunden oder verbindbar sein. Das UV-C Leuchtmittel kann angrenzend oder benachbart zu dem Hubsystem, insbesondere angrenzend oder benachbart zu dessen Auslass und/oder zu dessen Kolben angeordnet sein. Das UV-C Leuchtmittel ermöglicht somit eine Sterilisierung und Entkeimung des Auslasses und/oder des Kolbens. Es ist auch denkbar, dass das UV-C Leuchtmittel oder ein weiteres UV-C Leuchtmittel angrenzend oder benachbart zu weiteren Komponenten des Hubsystems angeordnet ist, sodass diese Komponenten zuverlässig entkeimt bzw. sterilisiert werden können.

Vorzugsweise sind sämtliche Komponenten des Hubsystems als Wegwerfartikel bzw. Einwegartikel ausgebildet.

Insbesondere der Behälter mit einem Fluid kann als Einwegartikel ausgebildet sein.

Wenn fluidführende Schläuche oder Leitungen vorgesehen sind, können sämtliche fluidführenden Schläuche oder Leitungen, beispielsweise Schläuche oder Leitungen mittels derer das Fluid aus dem Behälter gepumpt wird, als Wegwerfartikel oder Einwegartikel ausgebildet sein und somit austauschbar sein. Dies ist besonders vorteilhaft, da die fluidführenden Leitungen verkeimen und verkalken können. Auch eine regelmäßige Reinigung kann dies nicht verhindern, sodass komplett auswechselbare Komponenten, die in Fluidkontakt stehen, vorteilhaft sind. Idealerweise kann ein "single batch" Verfahren angewandt werden, d.h., nachdem das Fluid in dem Behälter aufgebraucht ist, wird der gesamte Behälter ausgewechselt bzw. verworfen. Somit kann auf ein Reinigen und/oder Entkalken mit Chemikalien verzichtet werden, was besonders umweltschonend und vorteilhaft bei der Zubereitung von Babynahrung und Kaffee ist. Zum einen kommt es zu keiner gesundheitsschädlichen Kontamination des Fluids mit Chemikalien, zum anderen kommt es zu keinen Geschmacksveränderungen. Im Falle der Zubereitung von Medien und Puffer werden darüber hinaus Stillstandzeiten durch zusätzliches Reinigen der Komponenten vermieden. Dies ermöglicht ein besonders effizientes Arbeiten.

Der Behälter kann mit einem Fluid vorgefüllt, beispielsweise mit Wasser, geliefert werden. Der Behälter kann fest verbunden sein mit der Kolbenpumpe und/oder mit der Drehplatte. Denkbar ist aber auch, dass der Behälter lösbar mit der Kolbenpumpe und/oder der Drehplatte verbunden ist. Dabei kann der Behälter derart ausgestaltet sein, dass er nicht vom Anwender geöffnet werden kann und somit auch nicht nachgefüllt werden kann. Alternativ kann der Behälter aber auch als wiederverwendbarer Artikel ausgestaltet sein. Der Behälter kann dann eine zweite Öffnung mit einem Verschlusselement, beispielsweise ein Deckel oder ein Zipper bzw. Reißverschluss, aufweisen, beispielsweise auf einer zur ersten Öffnung gegenüberliegenden Seite des Behälters, sodass das Fluid im Inneren des Behälters durch die zweite Öffnung nachgefüllt werden kann. Denkbar ist auch, dass der Behälter durch die erste Öffnung, welche mit der Kolbenpumpe verbindbar ist, mit Fluid nachgefüllt werden kann. Dann muss die Kolbenpumpe vorübergehend von der ersten Öffnung gelöst bzw. abgenommen werden, sodass das Fluid durch die erste Öffnung nachgefüllt werden kann.

Vorzugsweise umfasst die zweite Öffnung des Behälters neben dem Verschlusselement auch ein Manipulationsschutzelement.

Das Manipulationsschutzelement kann mit dem Verschlusselement und/oder der Öffnung verbunden sein. Das Manipulationsschutzelement kann eine Plombe sein und ein Plombenband umfassen, das derart mit dem Verschlusselement verbunden ist, sodass es nicht möglich ist die Plombe gewaltsam zu öffnen oder zu manipulieren ohne eindeutige Spuren zu hinterlassen. Das Manipulationsschutzelement kann beispielsweise eine Versiegelung oder ein Versiegelungsaufkleber bzw. Siegelaufkleber sein, der auf die Öffnung geklebt ist und diese somit verschließt. Denkbar ist auch, dass das Manipulationsschutzelement mit dem Verschlusselement integral verbunden ist. Im Falle eines Schraubverschlusses kann das Verschlusselement einen manipulationssicheren Ring aufweisen, der sich bei einem erstmaligen Öffnen des Schraubverschlusses von dem Schraubverschluss löst. Das Manipulationsschutzelement bietet somit Schutz vor einem unerlaubten Öffnen des Behälters. So kann niemand unbemerkt, beispielsweise im Laden, den Behälter öffnen und etwas einfüllen, das Schaden anrichten könnte.

Vorzugsweise weist die Temperiereinrichtung eine Heizeinrichtung, insbesondere eine Heizplatte auf, wobei die Heizeinrichtung wenigstens teilweise in Kontakt mit dem Behälter angeordnet ist, wobei, vorzugsweise, die Heizeinrichtung wenigstens teilweise an einem Gehäuse des Behälters angrenzt oder anliegt.

Die Heizeinrichtung kann als eine Heizplatte oder als eine Heizmatte oder als eine Metallplatte ausgestaltet sein und integrierte oder anliegende Heizelemente umfassen. Die Heizplatte sollte derart zu dem Behälter angeordnet sein, sodass der Behälter möglichst nah an der Heizplatte anliegt. Dies ermöglicht eine Wärmeübertragung von der Heizplatte auf den Behälter, insbesondere auf eine der Außenseiten bzw. auf das Gehäuse des Behälters, sodass das Fluid im Inneren des Behälters zuverlässig geheizt werden kann. Es ist aber auch denkbar, dass die Temperiereinrichtung eine Kühleinrichtung, insbesondere eine Kühlplatte, aufweist, wobei die Kühleinrichtung wenigstens teilweise in Kontakt mit dem verbundenen Behälter angeordnet ist, wobei, vorzugsweise, die Kühleinrichtung wenigstens teilweise an dem Gehäuse des Behälters angrenzt oder anliegt. Die Kühleinrichtung kann als eine Kühlplatte oder als eine Kühlmatte oder als eine Metallplatte ausgestaltet sein und integrierte oder anliegende Kühlelemente umfassen. Dies ermöglicht eine Kühlung einer der Außenseiten des Gehäuses des Behälters, sodass das Fluid im Inneren des Behälters zuverlässig gekühlt werden kann. Besonders bevorzugt umfasst die Temperiereinrichtung sowohl eine Heizplatte als auch eine Kühlplatte. Alternativ kann die Temperiereinrichtung eine Temperierplatte umfassen, welche sowohl heizen als auch kühlen kann. Die Heizeinrichtung und/oder Kühleinrichtung bzw. die Heizplatte und/oder Kühlplatte können ein integraler Bestandteil des Gehäuses des Behälters ein. Es ist aber auch denkbar, dass die Heizeinrichtung und/oder Kühleinrichtung bzw. die Heizplatte und/oder Kühlplatte innerhalb des Gehäuses angeordnet sind.

Somit ist es möglich, dass je nach Verwendungsart bzw. Anwendungsgebiet des Hubsystems, das Fluid im Inneren des Behälters zunächst geheizt werden kann und dann gekühlt werden kann. Vorzugsweise ist die Heizplatte ausgebildet, um das Fluid bis auf eine Temperatur von wenigstens 100°C bzw. auf die Siedetemperatur zu erhitzen. Dies ermöglicht im Falle der Dosierung und/oder Zubereitung von Babynahrung eine Sterilisation des Fluids im Inneren des Behälters, sodass Keime und Bakterien zuverlässig abgetötet werden und das Fluid zur Zubereitung von Babynahrung geeignet ist. Mittels der Kühlplatte kann das Fluid danach auf eine Verzehrtemperatur von 37°C gekühlt werden. Im Falle der Dosierung und/oder Zubereitung von Kaffee ermöglicht die Heizplatte darüber hinaus, das Fluid auf eine zur Zubereitung von Kaffee geeignete Temperatur zwischen 90°C und 100°C, besonders bevorzugt etwa 96°C, zu erhitzen. Im Falle des Einsatzes des Hubsystems bei der Zubereitung von Medien und Puffer kann der Beutelinhalt mittels der Heizplatte geheizt bzw. aufgetaut werden. Wenn das Hubsystem in einer Vorrichtung zur Dosierung und Zubereitung von Kaffee zum Einsatz kommt, so kann das Fluid im Inneren des Behälters auf eine Temperatur abgekühlt bzw. gekühlt werden, die für spezielle Kaffeezubereitungsarten vorteilhaft sind, beispielsweise bei der Cold Brew Zubereitung.

Vorzugsweise ist die Heizplatte und/oder die Kühlplatte und/oder die Temperierplatte zum Heizen und Kühlen mit dem Gehäuse des Behälters in dessen unteren Bereich in Schwerkraftrichtung in Kontakt. Diese Anordnung der Heizplatte ermöglicht, dass das Fluid im unteren Bereich des Inneren des Behälters geheizt wird, sodass eine Umwälzbewegung des Fluids im Inneren des Behälters in Gang gesetzt wird und das Fluid im Inneren des Behälters gleichmäßig aufgeheizt werden kann. Durch die Anordnung der Kühlplatte kann der untere Bereich im Inneren des Behälters gekühlt werden, sodass die Umwälzbewegung des Fluids im Inneren des Behälters gestoppt werden kann und das Fluid im Inneren gekühlt werden kann. Besonders bevorzugt sind die Heizplatte und/oder die Kühlplatte im angrenzenden Bereich zwischen dem unteren und oberen Bereich entlang der Behälterlängsachse mit dem Gehäuse des Behälters in Kontakt. Denkbar ist, dass im Falle, dass die Temperiereinrichtung sowohl eine Heizplatte und eine Kühlplatte umfasst, die Heizplatte und die Kühlplatte an jeweils gegenüberliegenden Seiten des Behälters an dessen Gehäuse wenigstens teilweise angrenzen oder anliegen. Dies ermöglicht ein besonders effizientes Heizen und/oder Kühlen des Fluids im Inneren des Behälters.

Vorzugsweise sind die Heizplatte und/oder die Kühlplatte ausgestaltet, um mit einer Vorrichtung zur Dosierung und Zubereitung von Babynahrung oder Kaffee bzw. mit einer Vorrichtung zur Zubereitung eines Stoffgemischs, beispielsweise eines Mediums oder eines Puffers, verbunden zu werden oder verbindbar zu sein. Denkbar ist, dass die Heizplatte und/oder die Kühlplatte in einer geneigten Position in einer der zuvor beschriebenen Vorrichtungen angeordnet werden kann, beispielsweise an einer geneigten Seitenwand. Dies ermöglicht ein besonders nahes Anliegen des Behälters an der Heizplatte und/oder der Kühlplatte, was ein besonders effizientes Heizen und/oder Kühlen ermöglicht. Dieser Effekt kann aber auch dadurch erreicht werden, dass der Bereich in einer der zuvor beschriebenen Vorrichtungen alternativ oder zusätzlich derart eng begrenzt ist, sodass der Behälter zwingend an der Heizplatte und/oder an der Kühlpatte anliegen muss. Denkbar ist auch, dass die Heizeinrichtung und/oder Kühleinrichtung bzw. die Heizplatte und/oder Kühlplatte den Behälter wenigstens teilweise, vorzugsweise komplett umgeben. So kann der Behälter vollständig von der Heizeinrichtung und/oder Kühleinrichtung bzw. die Heizplatte und/oder Kühlplatte umgeben sein, wobei die Heizeinrichtung und/oder Kühleinrichtung bzw. die Heizplatte und/oder Kühlplatte an dem Behälter anliegen oder angrenzend oder benachbart angeordnet sein können. Eine geneigte oder schräge Position der Heizplatte und/oder Kühlpatte ist ferner für den Aufbau eines Systems, in dem der Behälter mit Hubsystem und Temperiereinrichtung verwendet werden soll, vorteilhaft. Beispielsweise beschränken Hängeschränke oftmals die Höhe eines Systems, beispielsweise bei einer Vorrichtung zur Zubereitung von Kaffee oder Babynahrung, die auf einer Küchenzeile platziert ist. Mit einer geneigten bzw. schrägen Heizplatte und/oder Kühlplatte kann ein größerer Behälter verwendet werden, welcher an der Heizplatte und/oder Kühlpatte ebenfalls geneigt bzw. schräg anliegt, wenn die vertikale Distanz, beispielsweise zwischen Küchenzeile und darüber angeordnetem Hängeschrank, eine vertikale Ausrichtung des Behälters nicht erlaubt. Des Weiteren ermöglicht eine geneigte Heizplatte und/oder Kühlplatte und somit eine geneigte Position des Behälters ein Einfüllen in einen Auffangbehälter, beispielsweise in eine Babyflasche, welcher eine Öffnung mit einem limitierten bzw. geringen Durchmesser umfasst.

Vorzugsweise umfasst die Heizplatte wenigstens zwei Heizzonen, vorzugsweise drei Heizzonen.

Die Heizzonen können als Heizstäbe ausgebildet sein, welche sich wenigstens teilweise zwischen zwei gegenüberliegenden Seiten bzw. Seitenkanten der Heizplatte erstrecken. Vorzugsweise erstrecken sich die Heizstäbe in Richtung der Heizplattenlängsachse wenigstens teilweise zwischen den gegenüberliegenden Seiten, weiter vorzugsweise erstrecken sich die Heizstäbe über den gesamten Bereich zwischen den gegenüberliegenden Seiten. Alternativ können die Heizstäbe auch im Wesentlichen quer zur Richtung der Heizplattenlängsachse wenigstens teilweise zwischen gegenüberliegenden Seiten erstrecken. Vorzugsweise erstrecken sich die Heizstäbe über den gesamten Bereich zwischen zwei gegenüberliegenden Seiten quer zur Heizplattenlängsachse. So können in Schwerkraftrichtung eine untere Heizzone, eine mittlere Heizzone und eine obere Heizzone vorgesehen sein. Die Heizstäbe können an einer Außenseite der Heizplatte angeordnet sein, welche gegenüberliegend zu der Außenseite der Heizplatte ist, an welche der Behälter für das Fluid anliegt oder angrenzt. Denkbar ist auch, dass die Heizstäbe in der Heizplatte integriert sind und durch das Innere der Heizplatte verlaufen. Die Heizstäbe können integral mit der Heizplatte ausgebildet sein. Es ist aber auch denkbar, dass die Heizstäbe mit der Heizplatte verbindbar bzw. verbunden sind. So können sie beispielsweise mit einer Außenseite der Heizplatte verklebt sein. Die verschiedenen Heizzonen verhindern, dass der Behälter bei sehr hohen Temperaturen an den Stellen schmilzt, an dem der Behälter kein Fluid im Inneren aufweist. Dies ist insbesondere dann vorteilhaft, wenn der Behälter sich entleert, und das Fluid als wärmeleitendes Medium nicht mehr gleichmäßig im Behälter vorhanden ist.

Vorzugsweise sind die wenigstens zwei Heizzonen, vorzugsweise drei Heizzonen, steuerbar bzw. regelbar. Vorzugsweise sind die Heizzonen bzw. die Heizstäbe einzeln ansteuerbar bzw. einzeln regelbar.

Dadurch, dass die Heizzonen einzeln ansteuerbar sind, kann beispielsweise dann, wenn das Fluid im Behälter schon teilweise entleert ist, nur die mittlere Heizzone und/oder die untere Heizzone angesteuert werden. So würde der obere Bereich des Behälters, welcher kein Fluid mehr enthält, nicht temperiert, und ein Schmelzen des Behälters bzw. dessen Gehäuses wird verhindert. Alternativ zu den Heizzonen bzw. Heizstäben könnte ein Behältermaterial verwendet werden, welches extrem hitzebeständig ist.

Vorzugsweise umfasst der Behälter ein flexibles Material oder ist aus einem flexiblen Material ausgebildet. Vorzugsweise umfasst der Behälter eine Aluminium-Verbundfolie oder ist aus einer Aluminium-Verbundfolie ausgebildet.

Durch das flexible Material kann der Behälter besonders nah an der Heizplatte und/oder Kühlplatte anliegen, besonders wenn er in einer der zuvor beschriebenen Vorrichtung eingeführt bzw. angeordnet ist. Dies ermöglicht ein besonders effizientes Heizen und/oder Kühlen. Die Verwendung einer Aluminium-Verbundfolie ermöglicht eine undurchlässige Barriere für Luft- und Licht und gewährleistet somit einen zuverlässigen Schutz des Fluids im Inneren des Behälters vor äußeren Einflüssen. Die Metallpartikel bzw. der Metallanteil ermöglicht darüber hinaus eine besonders gute Wärmeleitung zwischen der Heizplatte und/oder Kühlplatte und dem Fluid im Inneren des Behälters.

Vorzugsweise sind der Behälter und/oder das Hubsystem, insbesondere die Kolbenpumpe, aus einem Biokunststoff bzw. Bioplastik oder einem bio-basierten Kunststoff hergestellt. Der Behälter und/oder das Hubsystem können somit einen Kunststoff umfassen oder aus einem Kunststoff ausgebildet sein, der auf Basis nachwachsender Rohstoffe erzeugt wird. Dies ist vorteilhaft, da der Behälter und das Hubsystem somit biologisch abbaubar und kompostierbar sind, was besonders umweltfreundlich ist. Beispielsweise kann der Behälter eine Folie umfassen, die aus Steinpapier hergestellt ist. Steinpapier ist ein Bedruckstoff, der aus etwa 80 Gew.-% (etwa 60 Vol.-%) Kalziumkarbonat (Kalkstein) und etwa 20 Gew.-% (etwa 40 Vol.-%) Polyethylen-Harz (HDPE) als Bindemittel hergestellt wird. Gew.-% steht für Gewichtsprozent und Vol.-% steht für Volumenprozent. Die Verwendung von Steinpapier ist vorteilhaft, da Steinpapier eine Lebensmittelzulassung hat, wasserresistent ist und bis etwa 100 Grad Celsius hitzeresistent ist. Des Weiteren wird für Steinpapier kein Holz verwendet und Steinpapier kann von Recyclinganlagen gut erkannt und recycelt werden. Dabei bleibt nur Kalkstein übrig, wobei Kalkstein gut kompostierbar ist.

Denkbar ist, dass der Behälter zumindest teilweise aus Biokunststoff bzw. Bioplastik oder einem bio-basierten Kunststoff hergestellt ist und wenigstens teilweise eine Aluminium-Verbundfolie umfasst. Vorzugsweise ist die Aluminium-Verbundfolie in Kontakt mit der Temperiereinrichtung. Dies ermöglicht eine besonders gute Wärmeleitung zwischen der Heizplatte und/oder Kühlplatte und dem Fluid im Inneren des Behälters.

Vorzugsweise umfasst der Behälter ein formstabiles Material oder ist aus einem formstabilen Material ausgebildet. Vorzugsweise umfasst das Material des Behälters Metallpartikel.

Anstelle des flexiblen Materials kann der Behälter auch ein nicht flexibles Material umfassen und beispielsweise als ein formstabiler Behälter bzw. Container ausgestaltet sein. Dieser kann ein Gehäuse umfassen, das relativ dünn ist bzw. das eine Dicke aufweist, sodass die Übertragung von Wärme zwischen der Heizplatte und/oder Kühlplatte und dem Inneren des Behälters ermöglicht. Auch der formstabile Behälter kann Metallpartikel umfassen, sodass eine verbesserte Wärmeleitfähigkeit ermöglicht wird. Denkbar ist auch, dass der Behälter eine Kombination aus einem flexiblen und nicht flexiblen Material umfasst.

Vorzugsweise weist die Temperiereinrichtung ein Fixierelement auf, wobei die Temperiereinrichtung mittels des Fixierelements mit dem Behälter fixierbar bzw. verbindbar ist, wobei, vorzugsweise, das Fixierelement zumindest einen Magneten aufweist.

Die Temperiereinrichtung kann mit dem Behälter mittels eines Fixierelements verbunden bzw. verbunden sein. Denkbar ist, dass der Behälter ebenfalls ein Fixierelement aufweist. So können mittels der beiden Fixierelemente der Behälter und die Temperiereinrichtung bzw. die Heizplatte und/oder die Kühlplatte auf einfache Weise miteinander verbunden werden. Denkbar ist, dass die Fixierelemente jeweils als Magnete ausgebildet sind, sodass die Temperiereinrichtung bzw. die Heizplatte und/oder die Kühlplatte mit dem Behälter durch Magnetwirkung miteinander verbunden werden können. Alternativ könnten die Fixierelemente auch als Klickelemente oder als Klemmelemente oder als Rastelemente ausgebildet sein, sodass die Temperiereinrichtung bzw. die Heizplatte und/oder die Kühlplatte mit dem Behälter miteinander verklickt oder verklemmt oder verrastet werden. Diese Fixierelemente ermöglichen ein besonders einfaches und schnelles Verbinden der Temperiereinrichtung mit dem Behälter, sodass der Behälter einfach und schnell ausgewechselt werden kann.

Vorzugsweise ist die Temperiereinrichtung steuerbar bzw. regelbar.

Damit mit der Temperiereinrichtung bzw. mit der Heizplatte unterschiedliche Temperaturen für die verschiedenen, zuvor beschriebenen Einsatzgebiete einstellbar bzw. steuerbar bzw. regelbar sind, kann das Hubsystem oder die Temperiereinrichtung weiterhin eine Steuer- und Regeleinrichtung zur Steuerung bzw. Regelung der Temperatur der Heizplatte und/oder der Kühlplatte umfassen. Denkbar ist, dass die Steuerung bzw. Regelung mit einer Anwendungssoftware, beispielsweise einer App, koppelbar ist, sodass die Temperatur der Temperiereinrichtung beispielsweise von einem Smartphone über die App steuerbar bzw. regelbar ist.

Vorzugsweise ist die Temperiereinrichtung in einer Ebene angeordnet, die sich im Wesentlichen quer zur Schwerkraftrichtung erstreckt.

Die Temperiereinrichtung kann beispielsweise in einer der zuvor beschriebenen Vorrichtungen zur Dosierung und Zubereitung von Babynahrung oder Kaffee oder zur Zubereitung eines Stoffgemischs, beispielsweise eines Mediums oder eines Puffers, in einer Ebene angeordnet sein, die im Wesentlichen quer zur Schwerkraftrichtung ausgerichtet ist. Die Temperiereinrichtung kann somit schräg bzw. geneigt gelagert sein, beispielsweise schräg zu einer oberen und unteren Begrenzung einer zuvor beschriebenen Vorrichtung. Somit kann der Behälter für ein Fluid angrenzend oder benachbart, insbesondere anliegend zur Temperiereinrichtung angeordnet sein. Der Behälter kann somit in einer Ebene angeordnet sein, die im Wesentlichen parallel zur Ebene der Temperiereinrichtung verläuft. Durch die schräge bzw. geneigte Lagerung des Behälters kann das Fluid im Inneren des Behälters nahezu vollständig aus dessen Auslass austreten. Gleichzeitig kann durch die schräge bzw. geneigte Lagerung der Temperiereinrichtung das Fluid im Inneren des Behälters auf die geeignete Temperatur temperiert werden. Die Schräge dient dabei dem besseren Kontakt zwischen Behälter und Temperiereinrichtung bzw. Heizplatte und/oder Kühlplatte. Dies ermöglicht eine bessere und schnellere Erhitzung. Weiterhin kann das Fluid im Inneren des Behälters durch die geneigte Position besonders einfach in einen Behälter gefüllt werden, beispielsweise eine Babyflasche, eine Kaffeetasse oder - kann, oder in eine Zubereitungseinrichtung einer Vorrichtung zu Zubereitung eines Stoffgemischs, welche nur eine kleine bzw. begrenzte Öffnung zum Einfüllen des Fluids aufweist.

Eine geneigte oder schräge Position der Temperiereinrichtung, beispielsweise der Heizplatte und/oder Kühlpatte, ist ferner für den Aufbau eines Systems, in dem der Behälter mit Hubsystem und Temperiereinrichtung verwendet werden soll, vorteilhaft. Beispielsweise beschränken Hängeschränke oftmals die Höhe eines Systems, beispielsweise bei einer Vorrichtung zur Zubereitung von Kaffee oder Babynahrung, die auf einer Küchenzeile platziert ist. Mit einer geneigten bzw. schrägen Heizplatte und/oder Kühlplatte kann ein größerer Behälter verwendet werden, welcher an der Heizplatte und/oder Kühlpatte ebenfalls geneigt bzw. schräg anliegt, wenn die vertikale Distanz, beispielsweise zwischen Küchenzeile und darüber angeordnetem Hängeschrank, eine vertikale Ausrichtung des Behälters nicht erlaubt. Des Weiteren ermöglicht eine geneigte Heizplatte und/oder Kühlplatte und somit eine geneigte Position des Behälters ein Einfüllen in einen Auffangbehälter, beispielsweise in eine Babyflasche, welcher eine Öffnung mit einem limitierten bzw. geringen Durchmesser umfasst.

Vorzugsweise umfasst der Behälter oder das Hubsystem zumindest einen Sensor.

Mittels eines Sensors kann der Füllstand des Fluids in dem Behälter ermittelt werden. Der Sensor kann angrenzend oder benachbart zu dem Behälter angeordnet sein. Der Sensor kann beispielsweise eine Waage sein, die derart mit dem Behälter angeordnet ist, beispielsweise unterhalb des Behälters, sodass das Gewicht des Behälters und/oder das Gewicht bzw. die Gewichtsänderung des Fluids im Inneren des Behälters ermittelt werden kann. Somit kann jederzeit der Füllstand des Behälters ermittelt und angezeigt werden, sodass das Fluid nachgefüllt werden kann bzw. der leere Behälter ausgetauscht bzw. ausgewechselt werden kann. Die Waage kann auch alternativ verwendet werden, beispielsweise zum Nachjustieren von Fluid, wie später im Zusammenhang mit dem zweiten, weiteren Hubsystem beschrieben. Besonders bevorzugt ist die Waage hierzu in Schwerkraftrichtung unterhalb eines Auffangbehälters, beispielsweise unterhalb einer Babyflasche, einer Kaffeetasse oder -kanne oder Kaffeefilterhalter, oder unterhalb einer Zubereitungseinrichtung, beispielsweise unterhalb einer Zubereitungseinrichtung für Stoffgemische, platziert. Der Sensor bzw. die Waage kann mit einem Klemmelement, beispielsweise einer Klammer bzw. Hebeklammer bzw. Hebeklemme, verbunden sein. Der Sensor bzw. die Waage können daher auch auf dem gleichen Niveau wie der Behälter oder oberhalb des Behälters angeordnet sein. Die Klammer kann an einer der Seitenwände einer Vorrichtung, beispielsweise einer Vorrichtung zur Zubereitung eines Stoffgemischs, beispielsweise eines Mediums oder eines Puffers, angeordnet sein. Vorzugsweise ist die Klammer derart mit dieser Vorrichtung verbunden, sodass sie in Schwerkraftrichtung verschiebbar ist. Somit ist es möglich, den Behälter in oder an oder auf der Klammer bzw. Hebeklammer anzuordnen bzw. zu platzieren, sodass die Position des Behälters in Schwerkraftrichtung veränderbar ist. Gleichzeitig kann das Gewicht des Fluids im Inneren des Behälters mittels des Sensors bzw. der Waage ermittelt werden.

Der Sensor bzw. die Waage kann derart mit einer Anwendungssoftware, beispielsweise einer Mobile App, verbunden sein, sodass automatisiert auf den Füllstands des Fluids hingewiesen werden kann, beispielsweise durch eine Signalton oder eine Signalleuchte, sodass ein neues Fluid bzw. ein neuer Behälter mit Fluid bereitgestellt werden kann. Denkbar ist auch eine automatische Bestellung eines neuen Fluids bzw. eines neuen Behälters mit Fluids, welche im nächsten Abschnitt beschrieben wird.

Es ist auch denkbar, dass die Ermittlung des Füllstands des Fluids über das Ausgangsvolumen oder -gewicht des Fluids erfolgt, welches beispielsweise dem Volumen oder dem Gewicht des noch nicht geöffneten (und Fluid aufweisenden) handelsüblichen Fluidbehälters entspricht. Die Daten über das Volumen oder das Gewicht des noch nicht geöffneten (und Fluid aufweisenden) handelsüblichen Fluidbehälters können beispielsweise in einer Datenbank oder in einer App gespeichert sein und dieser entnommen werden. Mittels eines Prozessors kann basierend auf dem Ausgangsvolumen oder -gewicht des Behälters für ein Fluid und der Anzahl der Dosierungen der Verbrauch des Fluids ermittelt bzw. berechnet werden. Der Prozessor kann Teil einer Vorrichtung, beispielsweise eine Vorrichtung zur Dosierung und Zubereitung von Babynahrung und/oder Kaffee oder eine Vorrichtung zur Zubereitung eines Stoffgemischs, beispielsweise eines Mediums oder eines Puffers, sein. Basierend auf diesen ermittelten bzw. berechneten Werten kann automatisiert Fluid, beispielsweise im Internet, nachbestellt werden. Hierzu kann eine Speichereinheit vorgesehen sein, in welcher die Nutzungsfrequenzen gespeichert sind. Dies ermöglicht eine Auslösung einer Bestellung unter Berücksichtigung der Lieferzeiten und/oder der Verbrauchsmengen und/oder des Sicherheitsbestands an noch nicht verwendeten Behälter und/oder des Verfallsdatums des Fluids im Inneren des Behälters. So braucht der Verwender nicht mehr darauf zu achten, wieviel Fluid noch zur Verfügung steht. Dieses wird automatisch nachbestellt und geliefert, ohne dass der Verwender gezielt eine Bestellung aufgeben muss und ohne dass der Verwender das Fluid im Handel kaufen muss. Dabei können die Behälter, die neu eintreffen, zunächst gescannt werden, wodurch ein Bestand an Behälter ermittelt bzw. registriert werden kann. So kann automatisiert ein Sicherheitsbestand bzw. Bestand an Behälter bei der Neubestellung berücksichtigt werden. Alternativ zur automatisierten Bestellung ist auch denkbar, dass der Anwender einen Hinweis bekommt, beispielsweise durch einen Signalton oder durch eine Nachricht, beispielsweise auf dem Bildschirm eines Computers oder eines Smart Devices, dass der Bestand an Behälter mit Fluid eine gewisse Mindestanzahl oder einen gewissen Sicherheitsbestand unterschritten hat, sodass der Anwender manuell die Nachbestellung tätigen kann.

Vorzugsweise umfasst die Kolbenpumpe eine Drehplatte. Vorzugsweise ist die Drehplatte als Exzenter ausgestaltet bzw. exzentrisch gelagert.

Die Drehplatte kann als Exzenter bzw. als Steuerungsscheibe ausgestaltet sein, welche auf einer Welle angebracht ist und deren Mittelpunkt außerhalb der Wellenachse liegt. Vorzugsweise ist der Kolben in Schwerkraftrichtung unterhalb des Exzenters und außerhalb, vorzugsweise oberhalb oder unterhalb in Schwerkraftrichtung, derer Wellenachse angeordnet. So kann auf vorteilhafte Weise die rotatorische Bewegung des Exzenters in die translatorische Bewegung des Kolbens bzw. in den Kolbenhub umgewandelt werden, sodass eine Dosierung ermöglicht wird.

Vorzugsweise umfasst das Hubsystem einen Motor, wobei die Drehplatte mit dem Motor verbunden oder verbindbar ist. Vorzugsweise ist die Drehplatte in Schwerkraftrichtung oberhalb des Kolbens angeordnet.

Durch den Motor kann die Drehplatte automatisiert angetrieben und in eine rotatorische Bewegung versetzt werden. Die Drehplatte kann in Schwerkraftrichtung oberhalb des Kolbens angeordnet sein. Es ist aber auch denkbar, dass die Drehplatte in Schwerkraftrichtung unterhalb des Kolbens angeordnet ist. Durch die rotatorische Bewegung wird der Kolben in eine translatorische Bewegung versetzt. So kann der Kolben in Schwerkraftrichtung nach unten in Richtung des Behälters gedrückt werden, sodass das Fluid aus dem Behälter gepumpt und korrekt dosiert werden kann. Somit kann durch die Auslenkung bzw. Bewegung des Kolbens das Fluid aus dem Behälter gepumpt und korrekt dosiert werden. Eine Motorumdrehung kann zu mehreren Hubbewegungen führen. Mit anderen Worten kann eine Umdrehung des Motors zu mehreren kombinierten rotatorischen und translatorischen Bewegungen der Drehplatte und des Kolbens führen.

Vorzugsweise ist der Motor als wiederverwendbare Komponente ausgestaltet. Insbesondere wenn das Hubsystem auswechselbare Komponenten bzw. Einwegartikel umfasst, sollte der Motor mit diesen lösbar verbunden bzw. verbindbar sein. Beispielsweise kann der Motor mit einer auswechselbaren Drehplatte verbindbar sein, sodass der Motor wiederverwendet werden kann und die Drehplatte ausgetauscht werden kann. Denkbar ist aber auch, dass die Drehplatte mit dem Motor wiederverwendet werden kann.

Denkbar ist, dass das zuvor beschriebene Hubsystem in einem Hubsystemaufnahmebereich in einer der zuvor beschriebenen Vorrichtungen zur Dosierung und Zubereitung von Babynahrung oder Kaffee oder zur Zubereitung eines Stoffgemischs, beispielsweise eines Mediums oder eines Puffers, aufgenommen werden kann. Der Hubsystemaufnahmebereich kann ausgestaltet sein, um das Hubsystem mit dem Motor und/oder der Drehplatte und/oder der Kolbpumpe aufzunehmen. Es ist denkbar, dass der Motor und/oder die Drehplatte fest mit dem Hubsystemaufnahmebereich verbunden sind. Diese können beispielsweise an einer Wand, beispielsweise der Rückwand, des Hubsystemaufnahmebereichs und/oder an dessen Seitenwänden angeordnet sein. Der Behälter kann derart in den Hubsystemaufnahmebereich eingeführt und eingesetzt werden, sodass die Drehplatte und/oder der Kolben in dem Hubsystemaufnahmebereich mit dem Behälter interagieren bzw. wechselwirken können. Die Kolbenpumpe kann in Schwerkraftrichtung oberhalb der Drehplatte in das Gehäuse einklickbar sein. Der Motor kann ausgestaltet sein, um die Drehplatte in eine bestimmte Richtung bzw. Position zu drehen. Durch eine derartige Klickgeometrie ergibt sich auf vorteilhafte Weise eine formschlüssige Verbindung zwischen Drehplatte und Kolbenpumpe. Am Behälter für das Fluid kann eine Platte vorgesehen sein. Diese kann als Führungsmittel für das Einklicken der Kolbenpumpe dienen. Des Weiteren kann die Platte dazu dienen, den Behälter in das Gehäuse einer zuvor beschriebenen Vorrichtung einzuklicken oder mit diesem zu verbinden. So kann mittels der Drehplatte und des Kolbens das Fluid aus dem Behälter gepumpt und korrekt dosiert werden. Denkbar ist auch, dass die Kolbenpumpe und der Motor und/oder die Drehplatte und/oder der Kolben fest mit dem Behälter verbunden sind, und zusammen mit dem Behälter austauschbar sind. So können der Motor und/oder die Drehplatte und/oder der Kolben zusammen mit dem Behälter in den Hubsystemaufnahmebereich eingesetzt werden, sodass das Fluid aus dem Behälter gepumpt und dosiert werden kann.

Denkbar ist, dass die Kolbenpumpe in das Gehäuse bzw. in den Hubsystemaufnahmebereich innerhalb des Gehäuses einer der zuvor beschriebenen Vorrichtungen zur Dosierung und Zubereitung von Babynahrung oder Kaffee oder zur Zubereitung eines Stoffgemischs, beispielsweise eines Mediums oder eines Puffers, eingeführt oder eingeklickt werden kann. Der Kolben kann in Schwerkraftrichtung oberhalb oder unterhalb der Drehplatte angeordnet sein. Durch diese Anordnung und dadurch, dass die Kolbenpumpe in das Gehäuse bzw. in den Hubsystemaufnahmebereich einklickbar ist, ergibt sich auf vorteilhafte Weise eine formschlüssige Verbindung zwischen der Drehplatte und der Kolbenpumpe. Der Motor kann dann in eine bestimmte Position drehen. An dem Gehäuse bzw. in dem Hubsystemaufnahmebereich können Führungsmittel, beispielsweise eine Führungsplatte, angeordnet sein, mittels derer die Kolbenpumpe auf einfache Weise in das Gehäuse einführbar und/oder einklickbar ist. Des Weiteren kann durch die Führungsplatte ein Behälter für ein Fluid, wie im Folgenden beschrieben, in das Gehäuse eingeklickt werden. Die Drehplatte kann als Auswechselteil ausgebildet sein und somit wiederverwendbar sein. Sie kann am Motor angeordnet sein, vorzugsweise ist die Drehplatte mit dem Motor verbunden bzw. mit an diesem befestigt.

Gemäß einem weiteren Aspekt der Erfindung wird ein Behälter für ein Fluid bereitgestellt, wobei der Behälter ein Gehäuse mit einem Innenraum zur Aufnahme von Fluid und eine erste Öffnung in Fluidverbindung mit dem Innenraum umfasst, wobei der Behälter mit einem Hubsystem verbunden oder verbindbar ist, das Hubsystem umfassend eine Kolbenpumpe mit einem Kolben, sodass durch eine Auslenkung des Kolbens ein Fluid aus dem Behälter dosiert werden kann, und eine Temperiereinrichtung zum Temperieren des mittels des Hubsystems zu dosierenden Fluids, und wobei der Behälter ausgestaltet ist, sodass der Behälter mit der Temperiereinrichtung des Hubsystems koppelbar ist.

Der Behälter kann ausgestaltet sein, um mit dem zuvor beschriebenen Hubsystem verbunden oder verbindbar zu sein und kann somit sämtliche Merkmale und deren Vorteile aufweisen, die im Zusammenhang mit dem zuvor beschriebenen Behälter beschrieben wurden. Darüber hinaus kann auch das im Folgenden beschriebene Hubsystem sämtliche Merkmale und deren Vorteile aufweisen, die im Zusammenhang mit dem zuvor beschriebenen Hubsystem beschrieben wurden. Die Kolbenpumpe kann neben dem Kolben eine Drehplatte aufweisen, wobei der Kolben mittels der Drehplatte auslenkbar ist. Der Behälter kann mit der Temperiereinrichtung bzw. mit der Heizplatte und/oder der Kühlplatte des Hubsystems koppelbar sein bzw. verbindbar oder verbunden sein. Der Behälter kann somit angeordnet sein, sodass der Behälter an der Temperiereinrichtung des Hubsystems anliegt. Somit kann der Behälter für ein Fluid auf einfache Weise mit der Temperiereinrichtung verbunden und wieder gelöst werden, sodass nach dem Aufbrauchen des Fluids der Behälter schnell ausgetauscht werden kann.

Vorzugsweise ist das Hubsystem mit der ersten Öffnung des Behälters verbunden oder verbindbar.

Der Behälter kann eine erste Öffnung aufweisen, die beispielsweise die Auslassöffnung des Behälters ist, aus der das Fluid entnommen werden kann. Der Behälter kann mit dem Hubsystem fest verbunden oder verbindbar sein und derart angeordnet sein, sodass das Fluid aus dem Inneren des Behälters mittels des Hubsystems gepumpt werden kann. Beispielsweise kann das Hubsystem mit der ersten Öffnung des Behälters verbunden oder verbindbar sein. Hierzu kann das Hubsystem mit der ersten Öffnung fest oder lösbar, beispielsweise durch Verkleben oder Verschrauben, verbunden sein, sodass das Innere des Behälters in Fluidverbindung mit dem Hubsystem steht, beispielsweise über Schläuche oder andere fluidführende Leitungen. Somit kann auf einfache Weise das Fluid aus dem Inneren des Behälters gepumpt und dosiert werden.

Dadurch, dass der Behälter mit dem Hubsystem verbunden oder verbindbar ist, kann der Behälter und das Hubsystem, mit dem der Behälter verbunden oder verbindbar ist, auch für verschiedene, aus dem Stand der Technik bekannte Vorrichtungen verwendet werden. Dies können eine Vorrichtung zur Dosierung und Zubereitung von Babynahrung, eine Vorrichtung zur Dosierung und Zubereitung von Kaffee, oder eine Vorrichtung zur Zubereitung eines Stoffgemischs, beispielsweise eines Mediums oder eines Puffers, wie zuvor beschrieben, sein. Jede dieser Vorrichtungen sehen die Aufnahme eines Behälters für ein Fluid vor, wobei das Fluid im Inneren des Behälters mittels eines Temperierelements temperiert werden soll.

Vorzugsweise weist das Gehäuse des Behälters eine Anlagefläche auf, die derart ausgestaltet ist, sodass der Behälter mit der Temperiereinrichtung des Hubsystems wenigstens teilweise in Kontakt ist, wobei, vorzugsweise, die Temperiereinrichtung wenigstens teilweise an der Anlagefläche angrenzt oder anliegt, wobei, vorzugsweise, die Temperiereinrichtung eine Heizplatte umfasst.

Die Anlagefläche kann eine Außenfläche des Gehäuses sein und kann sich in Längsrichtung des Behälters zwischen einem unteren Bereich bzw. unteren Ende des Behälters und einem oberen Bereich bzw. oberen Ende des Behälters (in Schwerkraftrichtung gesehen) entlang der Behälterlängsachse wenigstens teilweise erstrecken. Vorzugsweise erstreckt sich die Anlagefläche zwischen dem unteren Bereich bzw. unteren Ende des Behälters und dem oberen Bereich bzw. oberen Ende des Behälters entlang der gesamten Behälterlängsachse. Die Anlagefläche kann sich in einem Bereich angrenzend oder benachbart zur Längsachse des Behälters erstrecken und an gegenüberliegenden Enden des Behälters, in einer Ebene quer zur Behälterlängsachse gesehen, beabstandet sein. Mit anderen Worten kann der Behälter derart an der Temperiereinrichtung anliegen, sodass gegenüberliegende Enden des Behälters nicht mit der Temperiereinrichtung wenigstens teilweise in Kontakt sind, sondern beabstandet von der Temperiereinrichtung sind.

Die Temperiereinrichtung kann eine Heizplatte umfassen, die als eine Heizmatte oder als eine Metallplatte ausgestaltet sein kann und integrierte oder anliegende Heizelemente umfassen kann. Die Heizplatte sollte derart zu dem Behälter angeordnet sein, sodass der Behälter mit seiner Anlagefläche möglichst nah an der Heizplatte anliegt. Dies ermöglicht eine Wärmeübertragung von der Heizplatte auf den Behälter, insbesondere auf eine der Außenseiten bzw. auf das Gehäuse des Behälters im Bereich der Anlagefläche, sodass das Fluid im Inneren des Behälters zuverlässig geheizt werden kann. Es ist aber auch denkbar, dass die Temperiereinrichtung eine Kühlplatte aufweist, wobei die Kühlplatte wenigstens teilweise in Kontakt mit dem verbundenen Behälter angeordnet ist, wobei, vorzugsweise, die Kühlplatte wenigstens teilweise an einem Gehäuse des Behälters, vorzugsweise an der Anlagefläche, angrenzt oder anliegt. Die Kühlplatte kann als eine Kühlmatte oder als eine Metallplatte ausgestaltet sein und integrierte oder anliegende Kühlelemente umfassen. Dies ermöglicht eine Kühlung einer der Außenseiten bzw. des Gehäuses des Behälters im Bereich der Anlagefläche, sodass das Fluid im Inneren des Behälters zuverlässig gekühlt werden kann. Besonders bevorzugt umfasst die Temperiereinrichtung sowohl eine Heizplatte als auch eine Kühlplatte und zwei Anlageflächen, sodass die Heizplatte und die Kühlplatte mit jeweils einer der Anlageflächen wenigstens teilweise in Kontakt sind. Die Anlageflächen sind vorzugsweise an gegenüberliegenden Seiten des Gehäuses des Behälters angeordnet, beispielsweise an gegenüberliegenden Seiten in einer Ebene quer zur Behälterlängsachse gesehen.

Somit ist es möglich, dass je nach Verwendungsart bzw. Anwendungsgebiet des Behälters, das Fluid im Inneren des Behälters zunächst geheizt werden kann und dann gekühlt werden kann. Vorzugsweise ist die Heizplatte ausgebildet, um das Fluid auf eine Temperatur von wenigstens 100°C bzw. auf die Siedetemperatur zu erhitzen. Dies ermöglicht im Falle der Dosierung und/oder Zubereitung von Babynahrung eine Sterilisation des Fluids im Inneren des Behälters, sodass Keime und Bakterien zuverlässig abgetötet werden und das Fluid zur Zubereitung von Babynahrung geeignet ist. Mittels der Kühlplatte kann das Fluid danach auf eine Verzehrtemperatur von 37°C gekühlt werden. Im Falle der Dosierung und/oder Zubereitung von Kaffee ermöglicht die Heizplatte darüber hinaus, das Fluid im Inneren des Behälters auf eine zur Zubereitung von Kaffee geeignete Temperatur zwischen 90°C und 100°C, besonders bevorzugt etwa 96°C, zu erhitzen. Im Falle der Verwendung des Behälters bei der Zubereitung von Medien und Puffer kann der Beutelinhalt mittels der Heizplatte geheizt bzw. aufgetaut werden. Wenn der Behälter in einer Vorrichtung zur Dosierung und Zubereitung von Kaffee zum Einsatz kommt, so kann das Fluid im Inneren des Behälters auf eine Temperatur abgekühlt bzw. gekühlt werden, die für spezielle Kaffeezubereitungsarten vorteilhaft sind, beispielsweise bei der Cold Brew Zubereitung.

Vorzugsweise befindet sich die Anlagefläche wenigstens im unteren Bereich des Behälters in Kontakt mit der Heizplatte und/oder der Kühlplatte. Dies ermöglicht, dass das Fluid im Inneren des Behälters in dessen unteren Bereich geheizt wird, sodass eine Umwälzbewegung des Fluids im Inneren des Behälters in Gang gesetzt wird und das Fluid im Inneren des Behälters gleichmäßig aufgeheizt werden kann. Durch die Anordnung der Kühlplatte kann der untere Bereich im Inneren des Behälters gekühlt werden, sodass die Umwälzbewegung des Fluids im Inneren des Behälters gestoppt werden kann und das Fluid im Inneren des Behälters gekühlt werden kann.

Vorzugsweise ist der Behälter ausgestaltet, sodass die Temperiereinrichtung mittels eines Fixierelements mit dem Behälter fixierbar bzw. verbindbar ist, wobei, vorzugsweise, das Fixierelement ein Magnet ist.

Der Behälter kann mit der Temperiereinrichtung mittels eines Fixierelements verbunden bzw. verbunden sein. Denkbar ist, dass der Behälter und die Temperiereinrichtung jeweils ein Fixierelement aufweisen. So können mittels der beiden Fixierelemente der Behälter und die Temperiereinrichtung bzw. die Heizplatte und/oder die Kühlplatte auf einfache Weise miteinander verbunden werden. Denkbar ist, dass die Fixierelemente jeweils als Magnete ausgebildet sind, sodass die Temperiereinrichtung bzw. die Heizplatte und/oder die Kühlplatte mit dem Behälter durch Magnetwirkung miteinander verbunden werden können. Alternativ könnten die Fixierelemente auch als Klickelemente oder als Klemmelemente oder als Rastelemente ausgebildet sein, sodass die Temperiereinrichtung bzw. die Heizplatte und/oder die Kühlplatte mit dem Behälter miteinander verklickt oder verklemmt oder verrastet werden. Alternativ können die Temperiereinrichtung bzw. die Heizplatte und/oder die Kühlplatte mit dem Behälter mittels Klettverschlusselemente oder Klebeelemente verbunden werden. Diese Fixierelemente ermöglichen ein besonders einfaches und schnelles Verbinden der Temperiereinrichtung mit dem Behälter, sodass der Behälter einfach und schnell ausgewechselt werden kann.

Vorzugsweise umfasst der Behälter bzw. das Gehäuse des Behälters ein flexibles Material oder ist aus einem flexiblen Material ausgebildet, wobei, vorzugsweise, der Behälter bzw. das Gehäuse des Behälters eine Aluminium-Verbundfolie umfasst oder aus einer Aluminium-Verbundfolie ausgebildet ist.

Durch das flexible Material kann der Behälter bzw. das Gehäuse des Behälters besonders nah an der Heizplatte und/oder Kühlplatte, vorzugsweise im Bereich der Anlagefläche, anliegen, besonders wenn er in einer der zuvor beschriebenen Vorrichtung eingeführt bzw. angeordnet ist. Dies ermöglicht ein besonders effizientes Heizen und/oder Kühlen. Die Verwendung einer Aluminium-Verbundfolie ermöglicht eine undurchlässige Barriere für Luft- und Licht und gewährleistet somit einen zuverlässigen Schutz des Fluids im Inneren des Behälters vor äußeren Einflüssen. Die Metallpartikel bzw. der Metallanteil ermöglicht darüber hinaus eine besonders gute Wärmeleitung zwischen der Heizplatte und/oder Kühlplatte und dem Fluid im Inneren des Behälters.

Vorzugsweise umfasst der Behälter bzw. das Gehäuse des Behälters ein formstabiles Material oder ist aus einem formstabilen Material ausgebildet.

Anstelle des flexiblen Materials kann der Behälter bzw. das Gehäuse des Behälters auch ein nicht flexibles Material umfassen und beispielsweise als ein formstabiler Behälter bzw. Container ausgestaltet sein. Dieser kann ein Gehäuse umfassen, das relativ dünn ist bzw. das eine Dicke aufweist, sodass die Übertragung von Wärme zwischen der Heizplatte und/oder Kühlplatte und dem Inneren des Behälters ermöglicht. Auch der formstabile Behälter kann Metallpartikel umfassen, sodass eine verbesserte Wärmeleitfähigkeit zwischen der Temperiereinrichtung bzw. Heizplatte und/oder Kühlplatte und dem Inneren des Behälters ermöglicht wird. Denkbar ist auch eine Ausgestaltungsform, bei der der Behälter sowohl ein formstabiles Material und ein flexibles Material umfasst bzw. bei der der Behälter sowohl aus einem formstabilen Material und einem flexiblen Material ausgebildet ist. Der Behälter kann somit aus einer Kombination von unterschiedlichen Materialien ausgebildet sein.

Vorzugsweise umfasst der Behälter eine zweite Öffnung, wobei, vorzugsweise, der Behälter einen Deckel umfasst zum Abdecken der zweiten Öffnung.

Die zweite Öffnung kann in Richtung der Behälterlängsachse gegenüberliegend zur ersten Öffnung angeordnet sein. Beispielsweise kann die erste Öffnung im unteren Bereich bzw. angrenzend oder benachbart zum unteren Ende des Behälters angeordnet sein, und die zweite Öffnung kann im oberen Bereich bzw. angrenzend oder benachbart zum oberen Ende des Behälters angeordnet sein. Durch diese Anordnung der zweiten Öffnung kann selbst im mit dem Hubsystem verbundenen Zustand auf besonders einfache Art und Weise Fluid in das Innere des Behälters nachgefüllt werden. Dies ist besonders vorteilhaft, wenn der Behälter wiederverwendet wird und nicht ausgewechselt wird. Der Behälter kann weiterhin ein Verschlusselement umfassen. Das Verschlusselement kann ein Deckel zum Abdecken der zweiten Öffnung sein, mit dem die zweite Öffnung nach dem Einfüllen des Fluids wieder verschlossen werden kann, sodass das Fluid im Inneren vor äußeren Einflüssen geschützt ist. Denkbar ist auch, dass das Verschlusselement ein Zipper bzw. ein Reißverschluss ist, mit dem die zweite Öffnung nach dem Einfüllen des Fluids wieder verschlossen werden kann.

Vorzugsweise kann die Temperiereinrichtung in einer Ebene angeordnet sein, die sich im Wesentlichen quer zur Schwerkraftrichtung erstreckt, wobei der Behälter wenigstens teilweise an der Temperiereinrichtung anliegt.

Die Temperiereinrichtung kann beispielsweise in einer der zuvor beschriebenen Vorrichtungen zur Dosierung und Zubereitung von Babynahrung oder Kaffee oder zur Zubereitung eines Stoffgemischs, beispielsweise eines Mediums oder eines Puffers, in einer Ebene angeordnet sein, die im Wesentlichen quer zur Schwerkraftrichtung ausgerichtet ist. Die Temperiereinrichtung kann somit schräg gelagert sein, beispielsweise schräg zu einer oberen und unteren Begrenzung einer zuvor beschriebenen Vorrichtung. Der Behälter für ein Fluid kann angrenzend oder benachbart, insbesondere anliegend zu einer Seite der Temperiereinrichtung angeordnet sein. Der Behälter kann somit in einer Ebene angeordnet sein, die im Wesentlichen parallel zur Ebene der Temperiereinrichtung verläuft. Durch die schräge bzw. geneigte Lagerung des Behälters kann das Fluid im Inneren des Behälters nahezu vollständig aus dessen Auslass austreten. Gleichzeitig kann durch die schräge bzw. geneigte Lagerung der Temperiereinrichtung das Fluid im Inneren des Behälters auf die geeignete bzw. vorgesehene Temperatur temperiert werden.

Eine geneigte oder schräge Position der Temperiereinrichtung, insbesondere der Heizplatte und/oder Kühlpatte, ist ferner für den Aufbau eines Systems, in dem der Behälter mit Hubsystem und Temperiereinrichtung verwendet werden soll, vorteilhaft. Beispielsweise beschränken Hängeschränke oftmals die Höhe eines Systems, beispielsweise bei einer Vorrichtung zur Zubereitung von Kaffee oder Babynahrung, die auf einer Küchenzeile platziert ist. Mit einer geneigten bzw. schrägen Heizplatte und/oder Kühlplatte kann ein größerer Behälter verwendet werden, welcher an der Heizplatte und/oder Kühlpatte ebenfalls geneigt bzw. schräg anliegt, wenn die vertikale Distanz, beispielsweise zwischen Küchenzeile und darüber angeordnetem Hängeschrank, eine vertikale Ausrichtung des Behälters nicht erlaubt. Des Weiteren ermöglicht eine geneigte Heizplatte und/oder Kühlplatte und somit eine geneigte Position des Behälters ein Einfüllen in einen Auffangbehälter, beispielsweise in eine Babyflasche, welcher eine Öffnung mit einem limitierten bzw. geringen Durchmesser umfasst.

Vorzugsweise umfasst das Hubsystem ferner wenigstens einen Sensor zur Bestimmung oder Ermittlung des Füllstands des Fluids im Innenraum des Behälters.

Der Füllstand des Fluids im Inneren bzw. im Innenraum des Behälters kann mittels des Sensors bestimmt oder ermittelt werden. Der Sensor kann angrenzend oder benachbart zu dem Behälter angeordnet sein. Der Sensor kann beispielsweise eine Waage sein, die derart mit dem Behälter angeordnet ist, beispielsweise unterhalb des Behälters (in Schwerkraftrichtung gesehen), sodass das Gewicht des Behälters und/oder des Fluids im Inneren des Behälters ermittelt werden kann. Somit kann jederzeit der Füllstand des Behälters ermittelt und angezeigt werden, sodass das Fluid nachgefüllt werden kann bzw. der leere Behälter ausgetauscht bzw. ausgewechselt werden kann. Die Waage kann auch alternativ verwendet werden, beispielsweise zum Nachjustieren von Fluid, wie später im Zusammenhang mit dem zweiten, weiteren Hubsystem beschrieben. Besonders bevorzugt ist die Waage hierzu in Schwerkraftrichtung unterhalb eines Auffangbehälters, beispielsweise unterhalb einer Babyflasche, einer Kaffeetasse oder -kanne oder eines Kaffeefilterhalters, oder unterhalb einer Zubereitungseinrichtung einer Vorrichtung zur Zubereitung eines Stoffgemischs platziert. Der Sensor kann derart mit einer Anwendungssoftware, beispielsweise einer Mobile App, verbunden sein, sodass automatisiert auf den Füllstand des Fluids hingewiesen werden kann, beispielsweise durch einen Signalton oder eine Signalleuchte, sodass ein neues Fluid bzw. ein neuer Behälter mit Fluid bereitgestellt werden kann.

Es ist auch denkbar, dass die Ermittlung des Füllstands des Fluids über das Ausgangsvolumen oder -gewicht des Fluids erfolgt, welches beispielsweise dem Volumen oder dem Gewicht des noch nicht geöffneten (und Fluid aufweisenden) handelsüblichen Fluidbehälters entspricht. Die Daten über das Volumen oder das Gewicht des noch nicht geöffneten (und Fluid aufweisenden) handelsüblichen Fluidbehälters können beispielsweise in einer Datenbank oder in einer App gespeichert sein und dieser entnommen werden. Mittels eines Prozessors kann dann basierend auf dem Ausgangsvolumen oder -gewicht des Behälters für ein Fluid und der Anzahl der Dosierungen den Verbrauch des Fluids ermittelt bzw. berechnet. Der Prozessor kann Teil einer Vorrichtung, beispielsweise eine Vorrichtung zur Dosierung und Zubereitung von Babynahrung und/oder Kaffee oder eine Vorrichtung zur Zubereitung eines Stoffgemischs, beispielsweise eines Mediums oder eines Puffers, sein. Basierend auf diesen ermittelten bzw. berechneten Werten kann automatisiert Fluid, beispielsweise im Internet, nachbestellt werden. Hierzu kann eine Speichereinheit vorgesehen sein, in welcher die Nutzungsfrequenzen gespeichert sind. Dies ermöglicht eine Auslösung einer Bestellung unter Berücksichtigung der Lieferzeiten und/oder der Verbrauchsmengen und/oder des Sicherheitsbestands an noch nicht verwendeten Behältern und/oder des Verfallsdatums des Fluids im Inneren des Behälters. So braucht der Verwender nicht mehr darauf zu achten, wieviel Fluid noch zur Verfügung steht. Dieses wird automatisch geliefert, ohne dass der Verwender gezielt eine Bestellung aufgeben muss und ohne dass der Verwender das Fluid im Handel kaufen muss. Dabei können die Behälter, die neu eintreffen, zunächst gescannt werden, wodurch ein Bestand an Behälter ermittelt bzw. registriert werden kann. So kann automatisiert ein Sicherheitsbestand bzw. Bestand an Behälter bei der Neubestellung berücksichtigt werden. Alternativ zur automatisierten Bestellung ist auch denkbar, dass der Anwender einen Hinweis bekommt, beispielsweise durch einen Signalton oder durch eine Nachricht, beispielsweise auf dem Bildschirm eines Computers oder auf dem Bildschirm eines Smart Devices oder in einer App, dass der Bestand an Behälter mit Fluid eine gewisse Mindestanzahl oder einen gewissen Sicherheitsbestand unterschritten hat, sodass der Anwender manuell die Nachbestellung tätigen kann.

Vorzugsweise ist der Behälter mit wenigstens einem weiteren Hubsystem verbunden oder verbindbar.

Der Behälter kann also neben einem ersten Hubsystem ein weiteres, zweites Hubsystem umfassen. Das weitere, zweite Hubsystem kann sämtliche zuvor beschriebene Merkmale des ersten Hubsystems und deren Vorteile aufweisen. Der Behälter kann neben der ersten Öffnung eine weitere Öffnung in dem unteren Bereich bzw. an dem unteren Ende (in Schwerkraftrichtung gesehen) umfassen, sodass das weitere Hubsystem mit der weiteren Öffnung verbunden oder verbindbar ist. Diese Verbindung kann in analoger Weise erfolgen, wie die Verbindung zwischen dem zuvor beschriebenen Hubsystem und der ersten Öffnung. Dadurch, dass der Behälter mit zwei Hubsystemen verbunden werden kann, können beispielsweise unterschiedliche Dosiermengen bzw. Hubvolumina mit den beiden Hubsystemen ermöglicht werden. Beispielsweise kann mit einem Hubsystem eine größere Menge Fluid dosiert werden und mit dem anderen der Hubsysteme kann eine kleinere Menge Fluid dosiert werden. So kann mit dem Hubsystem, mit dem eine kleinere Menge Fluid dosiert werden kann, eine genauere Dosierung erfolgen, wohingegen mit dem Hubsystem, mit dem eine größere Menge Fluid dosiert werden kann, eine schnellere Dosierung ermöglicht werden kann. Der Behälter bzw. der Bag kann mehrere Kammern umfassen. Die Kammern können jeweils mit einem Hubsystem verbunden oder verbindbar sein. Es ist aber auch denkbar, dass der Behälter bzw. der Bag eine erste Kammer umfasst, welche mit zwei Hubsystemen verbunden oder verbindbar ist, und eine weitere, zweite Kammer umfasst, welche mit einem weiteren Hubsystem verbunden oder verbindbar ist. Andere Kombinationen zwischen den Kammern und den Hubsystemen sind denkbar.

Vorzugsweise weist das wenigstens eine weitere Hubsystem wenigstens einen Sensor zur Bestimmung oder Ermittlung des Füllstands des Fluids im Innenraum des Behälters auf.

Das zweite, weitere Hubsystem kann einen Sensor umfassen, der ähnlich zu dem Sensor des (ersten) Hubsystems ausgestaltet sein kann. Somit kann der Füllstand des Fluids im Inneren bzw. im Innenraum des Behälters auch mittels des Sensors des weiteren Hubsystems bestimmt oder ermittelt werden. Der Sensor kann daher angrenzend oder benachbart zu dem Behälter angeordnet sein. Der Sensor kann beispielsweise eine Waage sein, die angrenzend oder benachbart zu dem Behälter angeordnet ist, beispielsweise unterhalb des Behälters (in Schwerkraftrichtung gesehen), sodass das Gewicht des Behälters und/oder des Fluids im Inneren des Behälters ermittelt werden kann. Denkbar ist auch, die Waage unterhalb des Auffangbehälters, beispielsweise unterhalb einer Babyflasche, einer Kaffeetasse oder -kanne oder an dem Kaffeefilterhalter anzuordnen. Somit kann jederzeit der Füllstand des Behälters mittels des Sensors bzw. der Waage des zweiten, weiteren Hubsystem ermittelt und angezeigt werden, sodass das Fluid nachgefüllt werden kann bzw. der leere Behälter ausgetauscht bzw. ausgewechselt werden kann. Dies ist vorteilhaft, da somit nachdem die Dosierung des Fluids mittels des Sensors bzw. der Waage des ersten Hubsystems erfolgt ist, die Waage des zweiten, weiteren Hubsystems zum Nachjustieren genutzt werden kann. Auch wird eine Kompensation der Dosierungsungenauigkeit von Schnecken ermöglicht. Der Sensor bzw. die Waage des zweiten bzw. weiteren Hubsystems kann derart mit einer Anwendungssoftware, beispielsweise einer Mobile App, verbunden sein, sodass automatisiert auf den Füllstand des Fluids hingewiesen werden kann, beispielsweise durch einen Signalton oder durch eine Signalleuchte, sodass ein neues Fluid bzw. ein neuer Behälter mit Fluid bereitgestellt werden kann.

Die Dosierungsgenauigkeit spielt bei verschiedenen Vorrichtungen eine große Rolle, insbesondere bei der zuvor beschriebenen Vorrichtung zur Zubereitung eines Stoffgemischs, beispielsweise eines Mediums oder eines Puffers, bei dem ein Fluid und ein Pulver miteinander vermischt werden. Hier muss sehr genau dosiert werden. Das Pulver muss in der Regel mit 0,5% Abweichung dosiert werden. Wird hierbei kann eine Förderung und Dosierung des Pulvers mittels einer Förderschnecke erfolgen, wobei das Pulver unter Umständen nicht so genau dosierbar ist. Dies ist dadurch begründet, dass das Pulver beim Öffnen einer Schneckenkammer bzw. eines Schneckengehäuses, in dem sich die Förderschnecke befindet, meist sofort entleert. Des Weiteren können insbesondere sehr kleine Schneckengeometrien das Pulver nicht prozesssicher fördern, sodass es zu Verklumpungen kommen kann. Eine Gesamtvolumenabweichung von etwa 5 Prozent ist für den Anwender in der Regel akzeptabel. Gewöhnlich wird zunächst Fluid bzw. Wasser in einen Trichter gefüllt, dann Pulver, dessen Gewicht durch einen Sensor, beispielsweise einer Waage, bestimmt wird, und schließlich wieder Fluid bzw. Wasser, um die Ungenauigkeit in der Pulverdosierung auszugleichen. Alternativ kann aber auch eine Feinjustierung mit dem zweiten, weiteren Hubsystem erfolgen, damit die Ungenauigkeit in der Pulverdosierung ausgeglichen werden kann. Dadurch, dass der Behälter mit einem ersten Hubsystem zur Dosierung einer größeren Menge Fluid und einem zweiten Hubsystem zur Dosierung einer kleineren Menge Fluid verbunden oder verbindbar ist, kann schnell und trotzdem präzise gearbeitet werden. Wäre der Behälter nur mit einem Hubsystem zur Dosierung einer kleinerer Menge Fluid verbunden oder verbindbar, so könnte zwar nachjustiert werden, allerdings würde die gesamte Dosierung sehr lange dauern.

Mit dem zweiten, weiteren Hubsystem kann auch eine Dosierungenauigkeit ausgeglichen werden, die bei der Dosierung des Fluids auftaucht, beispielsweise wenn zur Dosierung des Fluids anstelle eines ersten Hubsystems ein Klammersystem verwendet wird. Ein Klammersystem umfassend ein oder mehrere Klammerelemente, mit dem das Fluid dosiert werden soll, kann nämlich auch Dosierungenauigkeiten aufweisen, welche mittels des zuvor beschriebenen zweiten Hubsystems zur Dosierung einer kleineren Menge Fluid ausgeglichen werden können.

Vorzugsweise umfasst jedes der Hubsysteme einen Auslass mit einer Auslassöffnung, durch welche das Fluid aus dem Inneren des Behälters austreten kann, wobei der Auslass von wenigstens einem der Hubsysteme einen Querschnitt quer zu dessen Auslasslängsachse aufweist, welcher sich zur Auslassöffnung hin verjüngt.

Mit anderen Worten umfasst wenigstens eines der Hubsysteme einen pipettenartigen Auslass. Der Auslass beider Hubsysteme kann sich entlang einer Auslasslängsachse zwischen einem ersten Ende und einem zweiten Ende erstrecken. Der Auslass kann sich im Wesentlichen röhrenförmig entlang der Auslasslängsachse erstrecken. Des Weiteren kann der Auslass zwischen dem ersten Ende und dem zweiten Ende einen im Wesentlichen gleichen Querschnitt (quer zur Auslasslängsachse gesehen) aufweisen. Das Fluid kann aus dem Inneren des Behälters mittels der Kolbenpumpe zu dem Auslass gepumpt werden und kann an dem ersten Ende in den Auslass eintreten und an dem zweiten Ende aus der Auslassöffnung austreten und beispielsweise in einen Auffangbehälter gefüllt werden. Die Auslassöffnung kann somit an dem zweiten Ende angeordnet sein.

Bei wenigstens einem der Hubsysteme, beispielsweise bei dem zweiten, weiteren Hubsystem, kann der Auslass pipettenartig ausgestaltet sein. In diesem Fall kann der Auslass einen ersten Auslassabschnitt aufweisen, der sich wie zuvor beschrieben zwischen dem ersten Ende und dem zweiten Ende erstreckt. Angrenzend oder benachbart zu dem zweiten Ende kann der Auslass einen zweiten Auslassabschnitt aufweisen, der sich ebenfalls entlang der Auslasslängsachse erstreckt zwischen dem zweiten Ende und einem dritten Ende erstreckt. Das dritte Ende ist von dem ersten Ende weiter beabstandet als das zweite Ende. Der Auslass kann in dem zweiten Auslassabschnitt einen Querschnitt aufweisen, der sich zu dem dritten Ende hin verjüngt. Die Auslassöffnung kann dann an dem dritten Ende angeordnet sein und kann angrenzend oder benachbart zu dem dritten Ende eine Querschnittsfläche (quer zur Auslasslängsachse gesehen) aufweisen, die kleiner ist als die Querschnittsfläche des Auslasses an jeder Stelle des ersten Auslassabschnitts. Der erste Auslassabschnitt und der zweite Auslassabschnitt können einstückig gefertigt bzw. einstückig miteinander verbunden sein. Es ist aber auch denkbar, dass die beiden Auslassabschnitte als Einzelteile gefertigt sind, und an dem zweiten Ende des Auslasses miteinander verbunden sind, beispielsweise durch Aufstecken oder Verkleben.

Durch den pipettenartigen Auslass bzw. der pipettenartigen Auslassöffnung kann das Fluid im Inneren des Fluids auf besonders einfache Weise nachjustiert werden.

Beispielsweise kann durch das erste Hubsystem eine größere Menge an Fluid dosiert werden und zunächst eine größere Menge Fluid aus dem Behälter zu pumpen. Mittels des zweiten Hubsystems mit dem pipettenartigen Auslass bzw. der pipettenartigen Auslassöffnung kann dann eine geringe Menge Fluid nachdosiert werden, sodass eine vorbestimmte, exakte Menge an Fluid aus dem Behälter dosiert werden kann. Dies ist besonders vorteilhaft, da besonders geringe Mengen an Fluid dosiert werden können. Dies spielt eine große Rolle, wenn die Dosiergenauigkeit besonders relevant ist, beispielsweise bei der Zubereitung eines Stoffgemischs, insbesondere eines Mediums oder eines Puffers, bei dem eine Dosierungenauigkeit auftreten kann, die durch die Dosierung eines für das Medium oder das Puffer notwendigen Pulvers hervorgerufen wird.

Es ist auch denkbar, dass mehrere Behälter, beispielsweise zwei Behälter, mit einem Hubsystem verbunden oder verbindbar sind. Vorzugsweise umfasst wenigstens einer der Behälter eine Temperiereinrichtung mit sämtlichen zuvor beschriebenen Merkmalen, beispielsweise die Ausgestaltung als Heizplatte, und deren Vorteilen. Weiter vorzugsweise umfasst jeder der Behälter eine eigene Temperiereinrichtung mit sämtlichen zuvor beschriebenen Merkmalen. Dies ermöglicht, dass das Fluid im Inneren der mehreren Behälter unterschiedlich temperiert werden können. Vorzugsweise ist das Hubsystem mit dem Auslass von jedem der mehreren Behälter verbunden oder verbindbar. Dies ist vorteilhaft, da somit mittels ein und demselben Hubsystems ein Fluid im Inneren der beiden Behälter dosierbar ist. Es können daher mehrere Behälter mit dem gleichen Fluid vorgesehen sein, oder aber mehrere Behälter mit einem sich unterscheidenden Fluid, welche mit ein und demselben Hubsystem verbindbar oder verbunden sind. Zwei oder mehr Behälter sind somit vorteilhaft, wenn zwei oder mehr Stoffgemische hergestellt werden müssen und somit zwei oder mehr Stoffe, beispielsweise Pulver mit Wasser und/oder Natriumbikarbonat, miteinander vermischt werden müssen.

Vorzugsweise ist das Hubsystem mit einer Analysevorrichtung bzw. mit einem Analysesystem verbunden oder verbindbar. Das Analysesystem kann ein Messgerät, beispielsweise eine Waage, und/oder ein Smart Device und/oder eine Smart Watch umfassen. Vorzugsweise erfolgt die Dosierung des Fluids aus einem der zuvor beschriebenen Behältern in Abhängigkeit von durch das Analysesystem ermittelten oder übertragenen Daten.

Wie zuvor beschrieben, kann das Hubsystem bei verschiedenen Vorrichtungen eingesetzt werden, beispielsweise bei der zuvor beschriebenen Vorrichtung zur Zubereitung eines Stoffgemischs, beispielsweise eines Mediums oder eines Puffers, bei dem ein Fluid und ein Pulver miteinander vermischt werden. Das Hubsystem kann derart ausgestaltet sein, sodass die Pulverdosierung und/oder die Fluiddosierung der zuvor beschriebenen Vorrichtung in Abhängigkeit der durch das Messgerät, beispielsweise einer Waage, und/oder durch das Smart Device und/oder durch die Smart Watch ermittelten oder übertragenen Daten erfolgen kann. So ist beispielsweise eine Pulverdosierung und/oder eine Fluiddosierung in Abhängigkeit verschiedener benutzerbasierten Charakteristika denkbar, wie beispielsweise der Body-Mass-Index (BMI), das Gewicht oder der Blutsauerstoff einer betreffenden Person. Weiter denkbar ist, dass die Dosierung in Abhängigkeit eines Elektrokardiogramms (EKG), der Herzfrequenz, des Herzrhythmus, der sportlichen Aktivitäten, der Essensgewohnheiten, und/oder der Schlafgewohnheiten, wie die Länge der Schlafenszeit, einer Person erfolgen kann. Diese Werte können direkt ermittelt werden, beispielsweise über die Smart Watch und an das Hubsystem übertragen werden. Die Werte, wie beispielsweise solche basierend auf einem Elektrokardiogramm, können aber auch in der Smart Watch und/oder in dem Smart Device, beispielsweise in einer App, hinterlegt sein, und automatisch oder auf Abruf an das Hubsystem übermittelt werden. Auf vorteilhafte Weise kann somit ein benutzerbasiertes Stoffgemisch zubereitet werden, welches eine geeignete Mischung unterschiedlicher Stoffe, wie beispielsweise Vitamine, Magnesium, Omega-3, Kurkuma, Zink, Cholin, Chrom, Kupfer, und/oder Selenium, ist. Diese Stoffe sind nur beispielhaft genannt. Weitere Stoffe sind denkbar.

Vorzugsweise ist der Behälter vorgefüllt mit einem Fluid lieferbar. Der Behälter ist als Einwegartikel ausgebildet.

Sämtliche zuvor beschriebenen Behälter können bereits mit Fluid befüllt vom Hersteller lieferbar sein. So kann auf einfache Weise ein neuer Behälter nachbestellt werden, nachdem ein bereits vorhandener Behälter mittels des Hubsystems entleert wurde und das Fluid aufgebracht wurde. Somit ist der Behälter auswechselbar und kann auf einfache Weise von dem Hubsystem getrennt werden. Mit auswechselbar ist gemeint, dass der Behälter als Wegwerfartikel bzw. Einwegartikel ausgebildet sein kann. Ein bereits entleerter Behälter kann somit einfach durch den neuen Behälter samt Fluid ersetzt werden. Dass die zuvor beschriebenen Behälter vorgefüllt bzw. vorbefüllt sein können und/oder als Wegwerfartikel oder Einwegartikel ausgebildet sein können und somit austauschbar sein können ist besonders vorteilhaft, wenn ein "single batch" Verfahren angewandt wird, d.h., nachdem das Fluid in dem Behälter aufgebraucht wird, wird der gesamte Behälter ausgewechselt bzw. verworfen. Somit kann auf ein Reinigen und Entkalken mit Chemikalien verzichtet werden, was besonders vorteilhaft bei der Zubereitung von Babynahrung und Kaffee ist. Zum einen kommt es zu keiner gesundheitsschädlichen Kontamination des Fluids mit Chemikalien, zum anderen kommt es zu keinen Geschmacksveränderungen. Im Falle der Herstellung von Medien und Puffer werden darüber hinaus Stillstandzeiten durch zusätzliches Reinigen der Komponenten vermieden. Dies ermöglicht ein besonders effizientes Arbeiten. Es ist allerdings auch denkbar, dass die zuvor beschriebenen Behälter als wiederverwendbarer Behälter ausgebildet sind, sodass das Fluid nach der Entleerung bzw. des Verbrauchs einfach nachgefüllt werden kann.

Die vorliegende Erfindung wird im Folgenden anhand lediglich bevorzugte Ausführungsbeispiele darstellende Zeichnungen erläutert, wobei
- Fig. 1: ein Hubsystem zur Dosierung von einem Fluid zeigt,
- Fig. 2: eine Schemazeichnung eines mit einem Behälter verbundenen Hubsystems zeigt,
- Fig. 3A: eine perspektivische Seitenansicht einer ersten Ausführungsform eines Behälters mit einem Hubsystem zeigt,
- Fig. 3B: eine Ansicht des in Fig. 3A dargestellten Behälters mit einem Hubsystem von unten zeigt,
- Fig. 3C: eine perspektivische Seitenansicht des mit dem Behälter aus Fig. 3A verbundenen Hubsystems zeigt,
- Fig. 4A: eine perspektivische Seitenansicht eines Behälters mit einem Hubsystem und einer Temperiereinrichtung zeigt,
- Fig. 4B: eine Ansicht des in Fig. 4A dargestellten Behälters mit einem Hubsystem und einer Temperiereinrichtung von oben zeigt,
- Fig. 4C: eine Ansicht des in Fig. 4A dargestellten Behälters mit einem Hubsystem und einer Temperiereinrichtung von der Seite zeigt, und
- Fig. 5: eine Schnittzeichnung einer zweiten Ausführungsform eines Behälters mit einem ersten Hubsystem und einem zweiten Hubsystem zeigt.

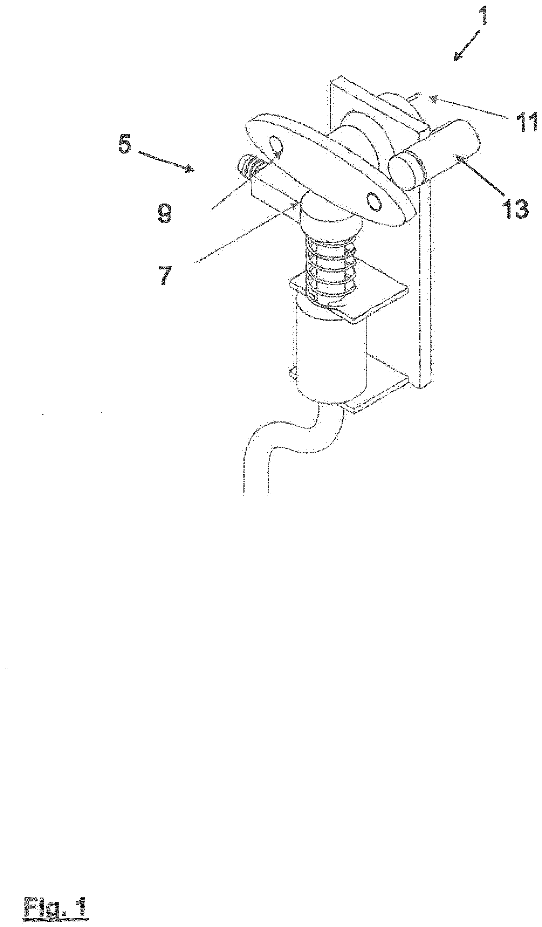

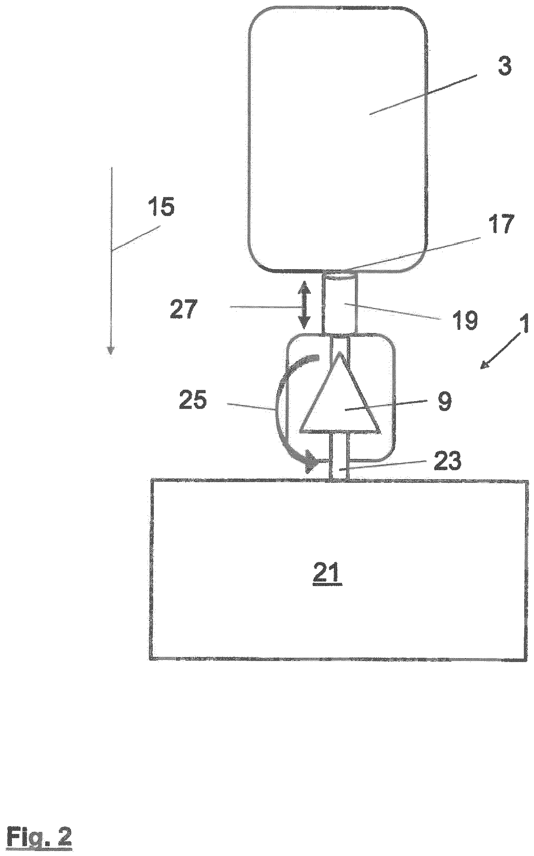

Zunächst wird unter Bezugnahme auf die Fig. 1 und 2 ein Ausführungsbeispiel eines Hubsystems 1 zur Dosierung von einem Fluid aus einem Behälter 3 erläutert.

Fig. 1 zeigt ein Hubsystem 1 zur Dosierung von einem Fluid aus einem Behälter 3 (nicht gezeigt in Fig. 1). Das Hubsystem 1 umfasst eine Kolbenpumpe 5 mit einem Kolben 7 und einer Drehplatte 9, wobei der Kolben 7 mittels der Drehplatte 9 auslenkbar ist, sodass durch diese Auslenkung des Kolbens 7 ein Fluid aus dem Behälter 3 (nicht gezeigt in Fig. 1) dosiert werden kann.

Das Hubsystem 1 umfasst ferner einen Motor 11, wobei die Drehplatte 9 mit dem Motor 11 verbunden oder verbindbar ist. Mit dem Motor 11 wird die Drehplatte 9 angetrieben, sodass mittels der Drehplatte 9 ein Druck auf den Kolben 7 ausgeübt werden kann. Die Drehplatte 9 ist mittels eines Anbindeelements 12, beispielsweise ein Hebel bzw. ein Hebelarm, mit der Kolbenpumpe 5 verbunden bzw. verbindbar. Der Kolben 7 kann somit durch die Drehplatte 9 ausgelenkt bzw. bewegt, und durch diese Auslenkung bzw. Bewegung kann das Fluid aus dem Behälter 3 gepumpt und korrekt dosiert werden. Die Kolbenpumpe 5 und die Drehplatte 9 können auswechselbar sein bzw. als Einwegartikel ausgebildet sein.

Das Hubsystem 1 umfasst ferner einen Sensor 13, mittels dessen der Füllstand des Fluids in dem Behälter 3 ermittelt werden kann.

Fig. 2 zeigt eine Schemazeichnung des mit dem Behälter 3 verbundenen Hubsystems 1. Das Hubsystem 1 ist in Schwerkraftrichtung 15 unterhalb des Behälters 3 angeordnet. Das Hubsystem 1 ist in dem in Fig. 2 gezeigten Beispiel mit einer ersten Öffnung 17 des Behälters 3 verbunden. Die erste Öffnung 17 entspricht der Auslassöffnung des Behälters 3, mit dem das Hubsystem 1 verbunden, beispielsweise verklebt oder verschweißt, ist. Hierzu kann das Hubsystem eine Rohrleitung bzw. Schlauch 19 aufweisen, der in die erste Öffnung 17 hineinragt und durch die das Fluid im Inneren des Behälters 3 herausgepumpt werden kann. Die Rohrleitung bzw. der Schlauch 19 kann auswechselbar sein bzw. als Einwegartikel ausgebildet sein.

Das Hubsystem 1 ist mit einem Behälter bzw. Becher 21 verbunden oder verbindbar, beispielsweise über ein Rohr- bzw. Schlauchsystem 23. Der Behälter bzw. Becher 21 kann beispielsweise eine Babyflasche oder ein Kaffeefiltertrichter oder eine Zubereitungseinrichtung in einer Vorrichtung zur Zubereitung eines Stoffgemischs, insbesondere eines Mediums oder eines Puffers, sein, in welche das mittels des Hubsystems 1 dosierte Fluid über das Rohr- bzw. Schlauchsystem 23 eingefüllt werden. So kann das mittels des Hubsystems 1 dosierte Fluid in den Behälter bzw. Becher 21 eingefüllt werden. Es sei angemerkt, dass das Rohr- bzw. Schlauchsystem 23 optional ist. Denkbar ist auch, dass das Fluid gravimetrisch in den Behälter bzw. Becher 21 gefüllt wird. Der Behälter bzw. Becher 21 ist in Schwerkraftrichtung 15 unterhalb des mit dem Behälter bzw. Fluidbehälter 3 verbundenen Hubsystems 1 angeordnet. Dabei ist das Hubsystem 1 in Schwerkraftrichtung 15 zwischen dem Behälter bzw. Becher 21 und dem Behälter bzw. Fluidbehälter 3 angeordnet bzw. positioniert. So kann das Fluid auf einfache Weise aus dem Behälter 3 in Richtung Hubsystem 1 durch die Schwerkraft geführt werden und aus dem Behälter 3 in den Behälter bzw. Becher 21 gepumpt werden. Das Hubsystem 1 weist eine Kolbenpumpe 5 mit einen Kolben 7 (nicht gezeigt in Fig. 2) und einer Drehplatte 9, welche als Exzenter ausgestaltet ist, auf. Der Exzenter ist auf einer Welle angebracht, deren Mittelpunkt außerhalb der Wellenachse liegt (nicht gezeigt in Fig. 2). Der Kolben 7 ist in dem Beispiel aus der Fig. 2 in Schwerkraftrichtung 15 oberhalb des Exzenters und dessen Wellenachse angeordnet. Der Exzenter ist mit dem Motor 11 verbunden. So kann auf vorteilhafte Weise eine rotatorische Bewegung 25 des Exzenters in eine translatorische Bewegung 27 des Kolbens 7 bzw. in den Kolbenhub umgewandelt werden.

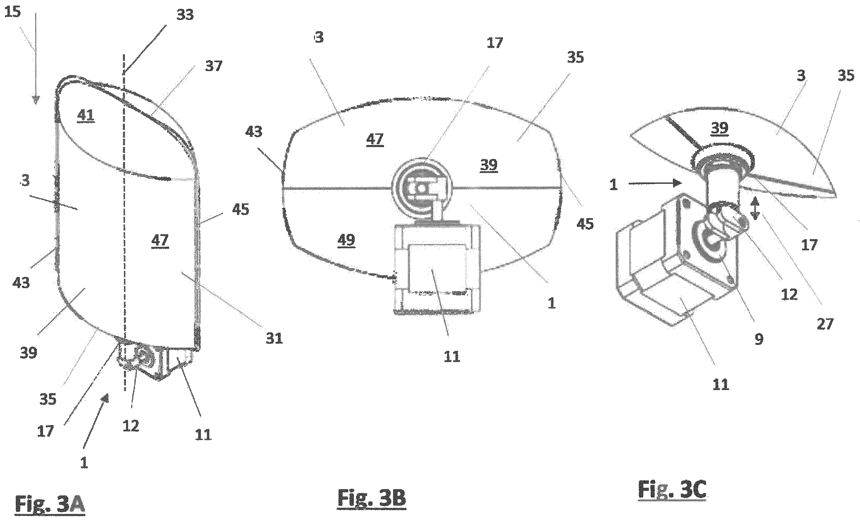

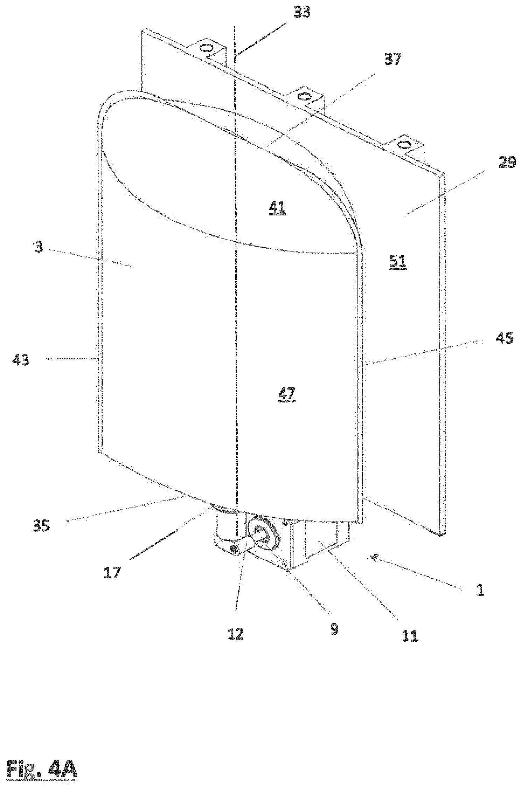

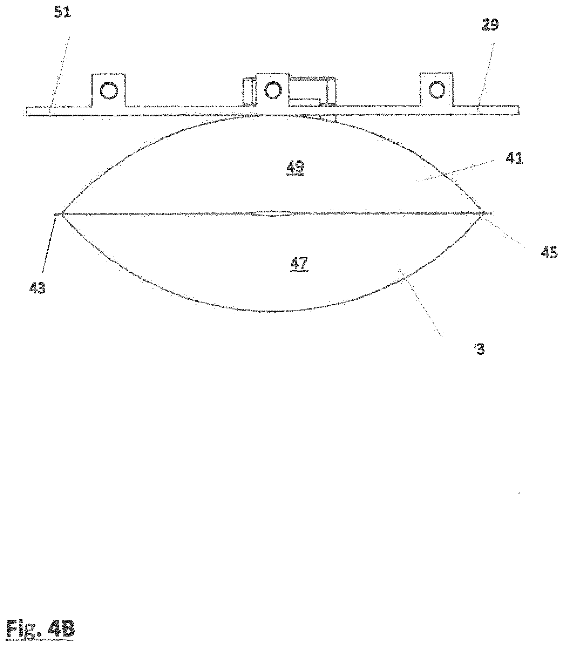

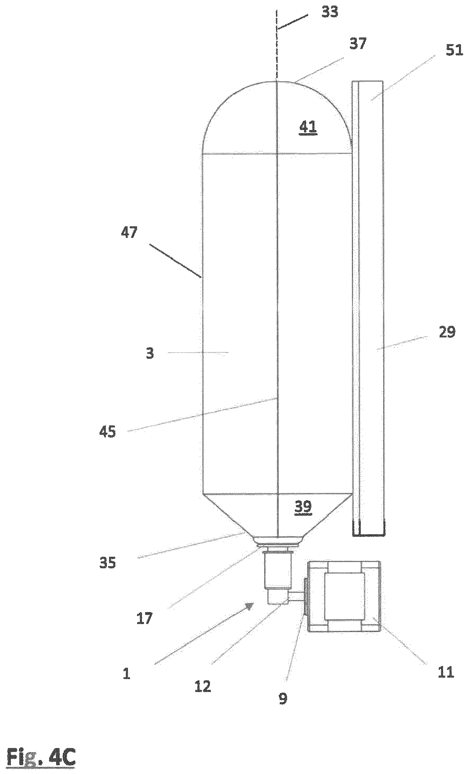

Fig. 3A bis 3C zeigen ein erstes Ausführungsbeispiel eines Behälters 3, der mit dem zuvor beschriebenen Hubsystem 1 verbunden ist. Fig. 4A bis 4C zeigen den Behälter 3 aus den Fig. 3A bis 3C, der mit einer Temperiereinrichtung 29 verbunden ist.

Der Behälter 3 umfasst ein flexibles Material und ist aus einer Aluminium-Verbundfolie ausgebildet. Es ist aber auch denkbar, dass der Behälter 3 ein formstabiles Material umfasst oder aus einem formstabilen Material ausgebildet ist. Der Behälter 3 kann aus einem Biokunststoff bzw. Bioplastik oder einem bio-basierten Kunststoff hergestellt sein. Der Behälter 3 umfasst ein Gehäuse 31 mit einem Innenraum zur Aufnahme für ein Fluid, wobei die erste Öffnung 17 in Fluidverbindung mit dem Innenraum des Behälters 3 ist. Der Behälter 3 kann vom Hersteller vorgefüllt mit einem Fluid geliefert werden. Der Behälter 3 kann auch derart ausgestaltet sein, sodass der Verbraucher den Behälter 3 nicht öffnen kann bzw. sodass der Verbraucher das Hubsystem 1 nicht entfernen kann. Der Behälter 3 erstreckt sich entlang einer Behälterlängsachse 33 zwischen einem ersten Ende 35 und zweiten Ende 37, wobei in der Schwerkraftrichtung 15 gesehen das erste Ende 35 einem unteren Ende 35 entspricht und das zweite Ende 37 einem oberen Ende 37 entspricht. Angrenzend oder benachbart zum unteren Ende 35 weist der Behälter 3 einen unteren Bereich 39 auf. Angrenzend oder benachbart zum oberen Ende 37 weist der Behälter 3 einen oberen Bereich 41 auf.

Die erste Öffnung 17 ist am unteren Ende 35 des Behälters 3 angeordnet, wobei sich die Behälterlängsachse 33 durch die erste Öffnung 17 hindurch erstreckt. Der untere Bereich 39 des Behälters weist quer zur Behälterlängsachse 33 gesehen einen Querschnitt auf, dessen Querschnittsfläche zum unteren Ende 35 abnimmt. Das heißt, dass der Querschnitt sich zum unteren Ende hin verjüngt bzw. konisch zuläuft. Der Behälter 3 weist auf gegenüberliegenden Seiten der Behälterlängsachse 33 eine erste Seitenkante 43 und ein zweite Seitenkante 45 auf, die jeweils eine Vorderseite 47 und eine Rückseite 49 des Behälters 3 miteinander verbinden. Die erste Öffnung 17 weist zu der ersten Seitenkante 43 einen im Wesentlichen gleichen Abstand auf wie zu der zweiten Seitenkante 45.

Die erste Öffnung 17 des Behälters 3 ist mit dem Hubsystem 1 verbunden. Der Behälter 3 kann auch eine zweite Öffnung umfassen (nicht gezeigt in den Fig. 3A bis 3C und Fig. 4A bis 4C). Die zweite Öffnung kann in Richtung der Behälterlängsachse 33 gegenüberliegend zur ersten Öffnung 17 angeordnet sein. Beispielsweise kann die zweite Öffnung im oberen Bereich 41 bzw. angrenzend oder benachbart zum oberen Ende 37 des Behälters 3 angeordnet sein. Durch diese Anordnung der zweiten Öffnung kann selbst im mit dem Hubsystem 1 verbundenen Zustand auf besonders einfache Art und Weise Fluid in das Innere des Behälters 3 nachgefüllt werden. Der Behälter 3 kann weiterhin ein Verschlusselement umfassen, beispielsweise einen Deckel zum Abdecken der zweiten Öffnung, mit dem die zweite Öffnung nach dem Einfüllen des Fluids wieder verschlossen werden kann.

Das mit dem Behälter 3 verbundene Hubsystem 1 umfasst ferner die Temperiereinrichtung 29, welche zum Temperieren des mittels des Hubsystems 1 zu dosierenden Fluids ausgestaltet ist. Die Temperiereinrichtung 29 kann wie der Motor 11 und die Drehplatte 9 als wiederverwendbarer Artikel ausgebildet sein. Es ist aber auch denkbar, dass der Motor 11, die Drehplatte 9, und die Temperiereinrichtung 29 wie der Behälter 3 und die Kolbenpumpe 5 als Einwegartikel ausgebildet sind und somit austauschbar sind. Die Temperiereinrichtung 29 weist eine Heizplatte 51 auf, wobei die Heizplatte 51 wenigstens teilweise in Kontakt mit dem verbundenen Behälter 3 angeordnet ist und wobei die Heizplatte 51 wenigstens teilweise an dem Gehäuse 31 des Behälters 3 angrenzt oder anliegt. Die Heizplatte 51 umfasst wenigstens eine im Wesentlichen ebene Außenfläche bzw. Kontaktfläche 53, die ausgestaltet ist um mit dem Gehäuse 31 des Behälters 3 anzuliegen. Die Kontaktfläche 53 liegt in dem in den Fig. 3A-3C und Fig. 4A-4C gezeigten Ausführungsbeispiel zumindest teilweise an der Rückseite 49 des Behälters 3 an.

Das Gehäuse 31 des Behälters 3 weist eine Anlagefläche 55 auf, die derart ausgestaltet ist, sodass der Behälter 3 mit der Temperiereinrichtung 29 des Hubsystems 1 wenigstens teilweise in Kontakt ist. Die Temperiereinrichtung 29 grenzt wenigstens teilweise an der Anlagefläche 55 an oder liegt an dieser an. Insbesondere ist die Temperiereinrichtung 29 derart mit dem Behälter 3 und dem Hubsystem 1 angeordnet, sodass die Kontaktfläche 53 der Heizplatte 51 an der Anlagefläche 55, welche an der Rückseite 49 des Behälters 3 angeordnet ist, wenigstens teilweise anliegt.

Die Anlagefläche 55 erstreckt sich in Richtung der Behälterlängsachse 33 zwischen dem unteren Bereich 39 bzw. unteren Ende 35 des Behälters 3 und dem oberen Bereich 41 bzw. oberen Ende 37 des Behälters 3 in Schwerkraftrichtung 15 gesehen, wenn der Behälter 3, das Hubsystem 1 und die Temperiereinrichtung 29 miteinander verbunden bzw. gekoppelt sind.

Die Anlagefläche 55 erstreckt sich in einem Bereich der Rückseite 49 des Behälters 3 angrenzend oder benachbart zur Behälterlängsachse 33 und ist beabstandet von den gegenüberliegenden ersten und zweiten Seitenkanten 43 und 45. Der Behälter 3 liegt somit derart an der Temperiereinrichtung 29 bzw. an der Kontaktfläche 53 der Heizplatte 51 an, sodass die erste Seitenkante 43 und zweite Seitenkante 45 nicht mit der Temperiereinrichtung 29 bzw. der Heizplatte 51 in Kontakt sind, sondern beabstandet von der Temperiereinrichtung 29 bzw. der Heizplatte 51 sind, wenn der Behälter 3 mit der Temperiereinrichtung 29 des Hubsystems 1 gekoppelt ist. Diese Ausgestaltung ist insbesondere bei einem an der ersten Seitenkante 43 und zweiten Seitenkante 45 verschweißten Behälter 3 vorteilhaft. Aus wärmetechnischen Gründen ist ein Kontakt des Behälters 3 an diesen Stellen nachteilhaft und zu vermeiden, da aufgrund des fehlenden Fluids als wärmeleitendes Medium die Gefahr besteht, dass die verschweißten Seitenkanten 43, 45 aufgeschmolzen und somit irreversibel beschädigt werden, sodass Fluid aus dem Inneren des Behälters 3 austreten kann. Denkbar wäre aber auch, dass der Behälter 3 derart ausgestaltet ist, sodass die gesamte Rückseite 49 des Behälters 3 als Anlagefläche 55 ausgebildet ist und die Heizplatte 51 mit der gesamten Kontaktfläche 53 an der Anlagefläche 55 anliegt, wobei die erste Seitenkante 43 und zweite Seitenkante 45 mit der Temperiereinrichtung 29 bzw. mit der Heizplatte 51 in Kontakt sind (nicht gezeigt in Fig. 4A bis 4C). Dadurch würde der Kontakt des Behälters 3 mit der Temperiereinrichtung 29 erhöht, was eine besonders effektive Temperierung des Fluids im Inneren des Behälters 3 ermöglicht.

Es ist aber auch denkbar, dass die Temperiereinrichtung 29 eine Kühlplatte oder eine Temperierplatte, welche sowohl heizen als auch kühlen kann, aufweist (nicht gezeigt in den Fig. 3A bis 3C und Fig. 4A bis 4C). Dabei kann die Heizplatte 51 durch eine Kühlplatte ausgetauscht sein. Es ist aber auch denkbar, dass die Kühlplatte gegenüberliegend zur Heizplatte 51 angeordnet ist, sodass die Kühlplatte an einer weiteren Anlagefläche anliegt, die sich an der Vorderseite 47 des Behälters 3 entlang der Behälterlängsachse 33 zwischen dem unteren Bereiche 39 bzw. unterem Ende 35 des Behälters 3 und dem oberen Bereich 41 bzw. oberen Ende 37 des Behälters erstreckt.

Die Temperiereinrichtung 29 kann ein Fixierelement aufweisen, mit dem der Behälter 3 fixierbar bzw. verbindbar ist mit der Temperiereinrichtung, wobei das Fixierelement zumindest einen Magnet aufweist (nicht gezeigt in den Fig. 3A bis 3C und Fig. 4A bis 4C). Weiterhin kann eine Steuer- und Regeleinrichtung zur Steuerung bzw. Regelung der Temperatur der Temperiereinrichtung 29 oder Heizplatte 51 und/oder Kühlplatte vorgesehen sein (nicht gezeigt in den Fig. 3A bis 3C und Fig. 4A bis 4C).

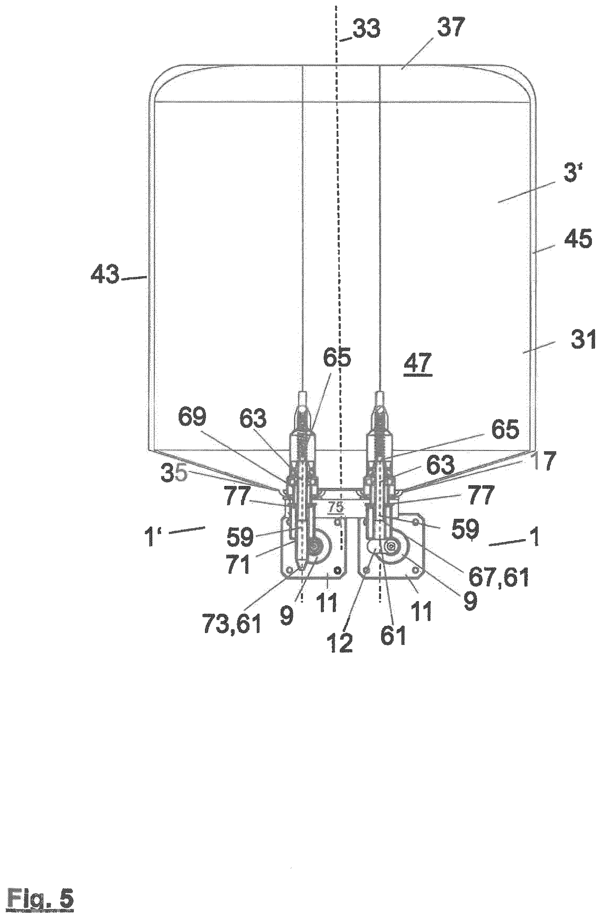

Fig. 5 zeigt ein zweites Ausführungsbeispiel eines Behälters 3'. Das zweite Ausführungsbeispiel des Behälters 3' unterscheidet sich von dem ersten Ausführungsbeispiel des Behälters 3 dadurch, dass der Behälter 3' ausgestaltet ist, um mit einem weiteren, zweiten Hubsystem 1' verbunden oder verbindbar zu sein. Der Behälter 3' umfasst somit ein erstes Hubsystem 1 und ein zweites Hubsystem 1', welche an dem ersten, unteren Ende 35 des Behälters 3' angeordnet sind. Der Behälter 3' umfasst neben der ersten Öffnung 17 eine zweite Öffnung 57, mit der das zweite Hubsystem 1' verbunden ist, beispielsweise verklebt oder verschweißt, ist. Die erste Öffnung 17 und die zweite Öffnung 57 sind auf gegenüberliegenden Seiten der Behälterlängsachse 33 angeordnet. Die Behälterlängsachse 33 verläuft also durch keine der Öffnungen 17, 57 hindurch.

Das wenigstens eine weitere, zweite Hubsystem 1' ist im Wesentlichen wie das erste Hubsystem 1 ausgestaltet und weist somit wenigstens einen Sensor zur Bestimmung oder Ermittlung des Füllstands des Fluids im Innenraum des Behälters 3 auf (nicht gezeigt in Fig. 5). Weiterhin umfasst jedes der Hubsysteme 1, 1' einen Auslass 59 mit einer Auslassöffnung 61, durch welche das Fluid aus dem Inneren des Behälters 3' austreten kann. Der Auslass 59 von wenigstens einem der Hubsysteme 1, 1` weist einen Querschnitt quer zu dessen Auslasslängsachse 63 auf, welcher sich zur Auslassöffnung 61 hin verjüngt. Die Auslasslängsachse 63 von jedem der Hubsysteme 1, 1' verläuft jeweils in einer Ebene, die parallel zur Ebene der Behälterlängsachse 33 ist. Der Behälter 3' bzw. das Gehäuse des Behälters 3' ist mittels eines Anschlusselements 75 mit den Hubsystemen 1, 1' verbunden bzw. verbindbar. Hierzu weist das Anschlusselement 75 vorzugsweise zwei Durchgangsbohrungen 77 auf, sodass die Hubsysteme 1, 1' durch die Durchgangsbohrungen 77 hindurch geführt werden können, und mit den ersten und zweiten Öffnungen 17, 57 des Behälters 3' verbunden werden können. Das Anschlusselement 75 ermöglicht ein besonders sicheres Verbinden des Behälters 3' mit den beiden Hubsystemen 1, 1'.

Der Auslass 59 des ersten Hubsystems 1 erstreckt sich entlang der Auslasslängsachse 63 zwischen einem ersten Ende 65 und einem zweiten Ende 67. Der Auslass 59 erstreckt sich im Wesentlichen röhrenförmig entlang der Auslasslängsachse 63. Die Auslassöffnung 61 des ersten Hubsystems 1 ist somit an dem zweiten Ende 67 angeordnet bzw. grenzt an dem zweiten Ende 67 an.

Bei dem zweiten, weiteren Hubsystem 1' ist der Auslass 59 pipettenartig ausgestaltet. Der Auslass 59 weist einen ersten Auslassabschnitt 69 auf, der sich wie zuvor im Zusammenhang mit dem ersten Hubsystem 1 beschrieben zwischen dem ersten Ende 65 und dem zweiten Ende 67 erstreckt. Angrenzend oder benachbart zu dem zweiten Ende 67 weist der Auslass 59 einen zweiten Auslassabschnitt 71 auf, der sich ebenfalls entlang der Auslasslängsachse 63 erstreckt zwischen dem zweiten Ende 67 und einem dritten Ende 73.

Der Auslass 59 des zweiten Hubsystems 1' weist in dem zweiten Auslassabschnitt 71 einen Querschnitt auf, der sich zu dem dritten Ende 73 hin verjüngt. Die Auslassöffnung 61 ist an dem dritten Ende 73 angeordnet und weist angrenzend oder benachbart zu dem dritten Ende 73 eine Querschnittsfläche (quer zur Auslasslängsachse gesehen) auf, die kleiner ist als die Querschnittsfläche des Auslasses 59 an jeder Stelle des ersten Auslassabschnitts 69.

Beide zuvor beschriebenen Behälter 3, 3' können vorgefüllt mit einem Fluid lieferbar sein. Die Behälter 3, 3' sind als Einwegartikel ausgebildet.

Das zuvor beschriebene Hubsystem 1 zur Dosierung von einem Fluid kann in einer Vielzahl von Anwendungsbereichen eingesetzt werden, beispielsweise bei der Zubereitung von Babynahrung aus einem Babynahrungskonzentrat, bei der Zubereitung von einem Kaffee, oder im biochemischen Bereich bei der Zubereitung eines flüssigen Mediums oder eines Puffers. Das zuvor beschriebene Hubsystem 1 zur Dosierung von einem Fluid aus einem Behälter 3 ist derart mit dem Behälter 3 koppelbar, sodass mittels des Hubsystems 1 ein Fluid aus dem Behälter 3 korrekt dosierbar ist. Dadurch dass das Hubsystem 1 eine Temperiereinrichtung 29 aufweist, kann das mittels des Hubsystems 1 dosierte Fluid gleichzeitig oder unmittelbar vor oder nach dem Dosieren temperiert werden. Das Hubsystem 1 ermöglicht somit eine vereinfachte und korrekte Dosierung von Fluid. Durch die zusätzliche Temperiermöglichkeit mittels der Temperiereinrichtung 29 ermöglicht das Hubsystem 1 ein besonders effizientes und zeitsparendes Arbeiten. Insbesondere im Bereich der Biochemie, beispielsweise bei der Zubereitung von Medien und Puffer, werden somit längere Standzeiten vermieden und ein effizientes Arbeiten ermöglicht.

### Bezugszeichenliste

- 1, 1': Hubsystem
- 3, 3': Behälter für ein Fluid
- 5: Kolbenpumpe
- 7: Kolben
- 9: Drehplatte
- 11: Motor
- 12: Anbindeelement
- 13: Sensor
- 15: Schwerkraftrichtung
- 17: erste Öffnung des Behälters
- 19: Rohrleitung bzw. Schlauch
- 21: Behälter bzw. Becher
- 23: Rohr- bzw. Schlauchsystem
- 25: rotatorische Bewegung des Exzenters
- 27: translatorische Bewegung des Kolbens
- 29: Temperiereinrichtung
- 31: Gehäuse
- 33: Behälterlängsachse
- 35: erstes, untere Ende des Behälters
- 37: zweites, obere Ende des Behälters
- 39: unterer Bereich des Behälters
- 41: oberer Bereich des Behälters
- 43: erste Seitenkante des Behälters
- 45: zweite Seitenkante des Behälters
- 47: Vorderseite des Behälters
- 49: Rückseite des Behälters
- 51: Heizplatte
- 53: Außenfläche bzw. Kontaktfläche
- 55: Anlagefläche
- 57: zweite Öffnung des Behälters
- 59: Auslass
- 61: Auslassöffnung
- 63: Auslasslängsachse
- 65: erstes Ende des Auslasses
- 67: zweites Ende des Auslasses
- 69: erster Auslassabschnitt
- 71: zweiter Auslassabschnitt
- 73: drittes Ende des Auslasses
- 75: Anschlusselement
- 77: Durchgangsbohrungen

## Patentansprüche

1. Behälter (3) mit einem Hubsystem (1) für ein Fluid umfassend:
ein Gehäuse (31) mit einem Innenraum zur Aufnahme von Fluid, und
eine erste Öffnung (17) in Fluidverbindung mit dem Innenraum,
wobei der Behälter (3) ausgestaltet ist, um mit dem Hubsystem (1) verbunden zu werden,
wobei das Hubsystem (1) zur Dosierung von dem Fluid aus dem Behälter (3) ausgebildet ist und eine Kolbenpumpe (5) mit einem Kolben (7) und eine Temperiereinrichtung (29) zum Temperieren des mittels des Hubsystems (1) zu dosierenden Fluids aufweist,
wobei die Kolbenpumpe (5) und der Kolben (7) ausgestaltet sind, sodass durch eine Auslenkung des Kolbens (7) eine vordefinierte Menge eines Fluids aus dem Behälter (3) dosiert wird,
wobei der Behälter (3) ausgestaltet ist, um mit der Temperiereinrichtung (29) des Hubsystems (1) gekoppelt zu werden, und
wobei der Behälter (3) als Einwegartikel ausgebildet ist.

2. Behälter (3) nach Anspruch 1, wobei das Hubsystem (1) mit der ersten Öffnung (17) des Behälters (3) verbunden oder verbindbar ist, und/oder
wobei das Gehäuse (31) des Behälters (3) eine Anlagefläche (55) aufweist, die derart ausgestaltet ist, sodass der Behälter (3) mit der Temperiereinrichtung (29) des Hubsystems (1) wenigstens teilweise in Kontakt ist,
wobei, vorzugsweise, die Temperiereinrichtung (29) wenigstens teilweise an der Anlagefläche (55) angrenzt oder anliegt,
wobei, vorzugsweise, die Temperiereinrichtung (29) eine Heizeinrichtung (51), insbesondere eine Heizplatte (51), umfasst.

3. Behälter (3) nach einem der Ansprüche 1 und 2, wobei der Behälter (3) ausgestaltet ist, sodass die Temperiereinrichtung (29) mittels eines Fixierelements mit dem Behälter (3) fixierbar bzw. verbindbar ist,
wobei, vorzugsweise, das Fixierelement ein Magnet ist, und/oder
wobei das Gehäuse (31) des Behälters (3) ein flexibles Material umfasst oder aus einem flexiblen Material ausgebildet ist,
wobei, vorzugsweise, das Gehäuse (31) des Behälters (3) eine Aluminium-Verbundfolie umfasst oder aus einer Aluminium-Verbundfolie ausgebildet ist, und/oder
wobei das Gehäuse (31) des Behälters (3) ein formstabiles Material umfasst oder aus einem formstabilen Material ausgebildet ist.

4. Behälter (3) nach einem der Ansprüche 1 bis 3, wobei der Behälter (3) eine zweite Öffnung umfasst,
wobei, vorzugsweise, der Behälter (3) einen Deckel umfasst zum Abdecken der zweiten Öffnung.

5. Behälter nach einem der Ansprüche 1 bis 4, wobei die Temperiereinrichtung (29) in einer Ebene angeordnet ist, die sich im Wesentlichen quer zur Schwerkraftrichtung (15) erstreckt, und wobei der Behälter (3) wenigstens teilweise an der Temperiereinrichtung (29) anliegt, und/oder
das Hubsystem (1) ferner umfassend wenigstens einen Sensor (13) zur Bestimmung oder Ermittlung des Füllstands des Fluids im Innenraum des Behälters (3).

6. Behälter (3') nach einem der Ansprüche 1 bis 5, wobei der Behälter (3') mit wenigstens einem weiteren Hubsystem (1') verbunden oder verbindbar ist,
wobei, vorzugsweise, das wenigstens eine weitere Hubsystem (1') wenigstens einen Sensor zur Bestimmung oder Ermittlung des Füllstands des Fluids im Innenraum des Behälters (3') aufweist, und/oder
wobei jedes der Hubsysteme (1, 1') einen Auslass (59) mit einer Auslassöffnung (61) umfasst, durch welche das Fluid aus dem Inneren des Behälters (3') austreten kann, wobei der Auslass (59) von wenigstens einem der Hubsysteme (1, 1') einen Querschnitt quer zu dessen Auslasslängsachse (63) aufweist, welcher sich zur Auslassöffnung (61) hin verjüngt.

7. Behälter (3, 3') nach einem der vorherigen Ansprüche 1 bis 6, wobei der Behälter (3, 3') vorgefüllt mit einem Fluid lieferbar ist.

8. Hubsystem (1) zur Dosierung von einem Fluid aus einem Behälter (3), umfassend
einen Behälter (3) gemäß einem der Ansprüche 1 bis 7, wobei das Hubsystem (1) mit dem Behälter (3) verbunden oder verbindbar ist,
eine Kolbenpumpe (5) mit einem Kolben (7), wobei die Kolbenpumpe (5) und der Kolben (7) ausgestaltet sind, sodass durch eine Auslenkung des Kolbens (7) eine vordefinierte Menge eines Fluids aus dem Behälter (3) dosiert wird, und
eine Temperiereinrichtung (29) zum Temperieren des mittels des Hubsystems (1) zu dosierenden Fluids.

9. Hubsystem (1) nach Anspruch 8, wobei das Hubsystem (1) mit einem Analysesystem verbunden ist,
wobei die Dosierung des Fluids aus dem Behälter (3) in Abhängigkeit von durch das Analysesystem ermittelten oder übertragenen Daten erfolgt.

## Claims

1. A container (3) with a lifting system (1) for a fluid, comprising:
a housing (31) with an interior for accommodating fluid, and
a first opening (17) in fluid communication with the interior,
wherein the container (3) is designed to be connected to the lifting system (1),
wherein the lifting system (1) is designed for dosing the fluid from the container (3) and has a piston pump (5) with a piston (7) and a temperature control device (29) for temperature control of the fluid to be dosed by means of the lifting system (1),
wherein the piston pump (5) and the piston (7) are designed so that a predefined amount of fluid is dosed out of the container (3) by deflection of the piston (7),
wherein the container (3) is designed to be coupled to the temperature control device (29) of the lifting system (1), and
wherein the container (3) is formed as a disposable item.

2. The container (3) according to claim 1, wherein the lifting system (1) is connected or connectable to the first opening (17) of the container (3), and/or
wherein the housing (31) of the container (3) has an abutment surface (55) that is designed so that the container (3) is at least partially in contact with the temperature control device (29) of the lifting system (1),
wherein, preferably, the temperature control device (29) at least partially adjoins or rests on the abutment surface (55),
wherein, preferably, the temperature control device (29) comprises a heating device (51), in particular a heating plate (51).

3. The container (3) according to one of claims 1 and 2, wherein the container (3) is designed so that the temperature control device (29) can be fixed or connected to the container (3) by means of a fixing element,
wherein, preferably, the fixing element is a magnet, and/or
wherein the housing (31) of the container (3) comprises a flexible material or is formed of a flexible material,
wherein, preferably, the housing (31) of the container (3) comprises an aluminum composite foil or is formed of an aluminum composite foil, and/or
wherein the housing (31) of the container (3) comprises a dimensionally stable material or is formed of a dimensionally stable material.

4. The container (3) according to one of claims 1 to 3, wherein the container (3) comprises a second opening,
wherein, preferably, the container (3) comprises a lid for covering the second opening.

5. The container according to one of claims 1 to 4, wherein the temperature control device (29) is arranged in a plane that extends substantially transversely to the direction of gravity (15), and wherein the container (3) at least partially abuts the temperature control device (29), and/or
the lifting system (1) further comprising at least one sensor (13) for identifying or determining the fill level of the fluid in the interior of the container (3).

6. The container (3') according to one of claims 1 to 5, wherein the container (3') is connected or connectable to at least one further lifting system (1'),
wherein, preferably, the at least one further lifting system (1') has at least one sensor for identifying or determining the fill level of the fluid in the interior of the container (3'), and/or
wherein each of the lifting systems (1, 1') comprises an outlet (59) with an outlet opening (61) through which the fluid can exit from the interior of the container (3'), the outlet (59) of at least one of the lifting systems (1, 1') having a cross section transverse to its longitudinal outlet axis (63), which tapers toward the outlet opening (61).

7. The container (3, 3') according to one of the preceding claims 1 to 6, wherein the container (3, 3') can be supplied prefilled with a fluid.

8. A lifting system (1) for dosing a fluid from a container (3), comprising
a container (3) according to one of claims 1 to 7, wherein the lifting system (1) is connected or connectable to the container (3),
a piston pump (5) with a piston (7), the piston pump (5) and the piston (7) being designed so that a predefined amount of fluid is dosed out of the container (3) by deflection of the piston (7), and
a temperature control device (29) for controlling the temperature of the fluid to be dosed using the lifting system (1).

9. The lifting system (1) according to claim 8, wherein the lifting system (1) is connected to an analysis system,
wherein dosing the fluid out of the container (3) is performed depending on data determined or transmitted by the analysis system.

## Revendications

1. Récipient (3) avec un système de course (1) pour un fluide comprenant :
un logement (31) avec un espace interne pour la réception de fluide, et
une première ouverture (17) en connexion fluidique avec l'espace interne,
dans lequel le récipient (3) est configuré pour être connecté au système de course (1),
dans lequel le système de course (1) est réalisé pour le dosage du fluide à partir du récipient (3), et présente une pompe à piston (5) avec un piston (7) et un dispositif d'équilibrage de température (29) pour équilibrer la température du fluide à doser au moyen du système de course (1),
dans lequel la pompe à piston (5) et le piston (7) sont configurés de sorte qu'une quantité prédéfinie d'un fluide est dosée à partir du récipient (3) par une déviation du piston (7),
dans lequel le récipient (3) est configuré pour être couplé au dispositif d'équilibrage de température (29) du système de course (1), et
dans lequel le récipient (3) est réalisé en tant qu'article à usage unique.

2. Récipient (3) selon la revendication 1, dans lequel le système de course (1) est connecté ou peut être connecté à la première ouverture (17) du récipient (3), et/ou
dans lequel le logement (31) du récipient (3) présente une face d'appui (55) qui est configurée de telle sorte que le récipient (3) est au moins partiellement en contact avec le dispositif d'équilibrage de température (29) du système de course (1),
dans lequel, de préférence, le dispositif d'équilibrage de température (29) jouxte ou repose au moins partiellement sur la face d'appui (55),
dans lequel, de préférence, le dispositif d'équilibrage de température (29) comprend un dispositif de chauffage (51), notamment une plaque chauffante (51).

3. Récipient (3) selon une des revendications 1 et 2, dans lequel le récipient (3) est configuré de sorte que le dispositif d'équilibrage de température (29) peut être fixé ou connecté au récipient (3) au moyen d'un élément de fixation,
dans lequel, de préférence, l'élément de fixation est un aimant, et/ou
dans lequel le logement (31) du récipient (3) comprend un matériau flexible ou est réalisé en un matériau flexible,
dans lequel, de préférence, le logement (31) du récipient (3) comprend une feuille composite en aluminium ou est réalisé en une feuille composite en aluminium, et/ou
dans lequel le logement (31) du récipient (3) comprend un matériau de forme stable ou est réalisé en un matériau de forme stable.

4. Récipient (3) selon une des revendications 1 à 3, dans lequel le récipient (3) comprend une seconde ouverture,
dans lequel, de préférence, le récipient (3) comprend un couvercle pour couvrir la seconde ouverture.

5. Récipient selon une des revendications 1 à 4, dans lequel le dispositif d'équilibrage de température (29) est disposé dans un plan qui s'étend essentiellement transversalement à la direction de force de pesanteur (15), et dans lequel le récipient (3) repose au moins partiellement sur le dispositif d'équilibrage de température (29), et/ou
le système de course (1) comprenant en outre au moins un capteur (13) pour la détermination ou l'évaluation du niveau du fluide dans l'espace interne du récipient (3).

6. Récipient (3') selon une des revendications 1 à 5, dans lequel le récipient (3') est connecté ou peut être connecté à au moins un autre système de course (1'),
dans lequel, de préférence, l'au moins un autre système de course (1') présente au moins un capteur pour la détermination ou l'évaluation du niveau du fluide dans l'espace interne du récipient (3'), et/ou
dans lequel chacun des systèmes de course (1, 1') comprend une sortie (59) avec une ouverture de sortie (61) à travers laquelle le fluide peut sortir de l'intérieur du récipient (3'), dans lequel la sortie (59) d'au moins un des systèmes de course (1, 1') présente une section transversale à son axe longitudinal de sortie (63) qui rétrécit vers l'ouverture de sortie (61).

7. Récipient (3, 3') selon une des revendications précédentes 1 à 6, dans lequel le récipient (3, 3') peut être livré prérempli d'un fluide.

8. Système de course (1) pour le dosage d'un fluide à partir d'un récipient (3), comprenant
un récipient (3) selon une des revendications 1 à 7, dans lequel le système de course (1) est connecté ou peut être connecté au récipient (3),
une pompe à piston (5) avec un piston (7), dans lequel la pompe à piston (5) et le piston (7) sont configurés de sorte qu'une quantité prédéfinie d'un fluide est dosée à partir du récipient (3) par une déviation du piston (7), et
un dispositif d'équilibrage de température (29) pour l'équilibrage de température du fluide à doser au moyen du système de course (1).

9. Système de course (1) selon la revendication 8, dans lequel le système de course (1) est connecté à un système d'analyse,
dans lequel le dosage du fluide à partir du récipient (3) s'effectue en fonction de données évaluées ou transmises par le système d'analyse.
